# EUROPÄISCHE PATENTSCHRIFT

(11) **EP 3 299 213 B1**
(45) Veröffentlichungstag und Bekanntmachung des Hinweises auf die Patenterteilung: **07.11.2018**
(21) Anmeldenummer: 16190697.9
(22) Anmeldetag: 26.09.2016
(51) Int. Cl.: B60N 2/22, B60N 2/20, F16C 1/10

(54) **FAHRZEUGSITZ-LÖSEEINRICHTUNG, FAHRZEUGSITZARRETIERUNG UND FAHRZEUGSITZ**
VEHICLE SEAT LOOSENING DEVICE, VEHICLE SEAT LOCKING AND VEHICLE SEAT
DISPOSITIF DE DETACHEMENT DE SIEGE DE VEHICULE, DISPOSITIF DE BUTEE DE SIEGE DE VEHICULE ET SIEGE DE VEHICULE

(43) Veröffentlichungstag der Anmeldung: 28.03.2018
(73) Patentinhaber: Schulte, Reinhold, 33106 Paderborn (DE)
(72) Erfinder: Schulte, Reinhold, 33106 Paderborn (DE)
(74) Vertreter: REHBERG HÜPPE + PARTNER

(56) Entgegenhaltungen:
- DE-A1-102004 050 773
- DE-A1-102015 100 921
- DE-U1- 20 218 008
- DE-U1-202006 008 821

## Beschreibung

### TECHNISCHES GEBIET DER ERFINDUNG

Die Erfindung betrifft eine Fahrzeugsitz-Löseeinrichtung. Die Fahrzeugsitz-Löseeinrichtung kann dabei eine Arretiervorrichtung eines Fahrzeugsitzes lösen, um diesen zu verstellen, oder auch wieder arretieren, um den Fahrzeugsitz gegen ein Verstellen zu sichern.

Fahrzeugsitze können in vielerlei Weise verstellbar sein: Um einen Fahrzeugsitz besonders gut auf seinen Benutzer einstellen zu können, sind Fahrzeugsitze gewöhnlich verschiebbar, so dass beispielsweise ein Abstand zwischen Fahrzeugsitz und Lenkrad bzw. Pedalen individuell angepasst werden kann. Darüber hinaus sind die Rückenlehnen von Fahrzeugsitzen häufig verschwenkbar. Dadurch kann zum einen die Rückenlehne in einen für den Benutzer des Fahrzeugsitzes bequemen Winkel zu einem Sitzteil des Fahrzeugsitzes gebracht werden, aber auch der Winkel der Rückenlehne zu dem Sitzteil situationsangepasst verändert werden. Beispielsweise kann die Rückenlehne zurückgelehnt werden, wenn der Benutzer sich in einer Fahrpause ausstrecken möchte. Es kann aber auch vorgesehen sein, dass die Rückenlehne so weit wie möglich nach vorn in Richtung auf das Sitzteil des Fahrzeugsitzes geklappt wird. Dies kann beispielsweise dann der Fall sein, wenn der Fahrzeugsitz einen Weg nicht versperren soll, beispielsweise zum Einsteigen in ein Fahrzeug oder in eine Kabine eines Nutzfahrzeugs oder um in einer Kabine eines Nutzfahrzeugs besonders viel Platz zu schaffen. Der Fahrzeugsitz kann dann in seine vorderste Position verschoben und die Rückenlehne so weit wie möglich nach vorn geklappt werden. Insbesondere bei Nutzfahrzeugen sind auch weitere Verstellmöglichkeiten des Fahrzeugsitzes möglich. So kann der Fahrzeugsitz etwa höhenverstellbar oder in einem Drehwinkel um die Hochachse verstellbar sein. Auch andere Verstellmöglichkeiten des Fahrzeugsitzes sind möglich. Gegen eine Verstellmöglichkeit muss der Fahrzeugsitz arretierbar sein und zum gewünschten Verstellen lösbar sein.

### STAND DER TECHNIK

Es ist bekannt, eine Arretiervorrichtung eines Fahrzeugsitzes für eine Verstellung zu lösen und nach der Verstellung wieder zu arretieren. Das Arretieren des Fahrzeugsitzes gegen eine Verstellung erfolgt über eine Arretiervorrichtung, die häufig eine Verriegelung ist. Beispielsweise kann eine Verriegelung gegen ein Verschwenken der Rückenlehne ein Verriegelungsrad aufweisen, das an der Rückenlehne befestigt ist, und eine Verriegelungsklinke, die ortsfest zu einem Sitzteil oder zu einer Sitzkonsole des Fahrzeugsitzes befestigt ist und die in das Verriegelungsrad formschlüssig eingreifen und für eine Verstellung gelöst werden kann.

Solche Arretiervorrichtungen befinden sich aus mechanischen Gründen normalerweise in der Nähe der Achse, um die die Verstellung erfolgt, oder eines bei dem Verstellen beweglichen Teils des Fahrzeugsitzes. So befindet sich die Verriegelungseinrichtung gegen das Verschwenken der Rückenlehne in dem beschriebenen Beispiel im Bereich der Achse, um die die Rücklehne verschwenkt wird. Eine Handbetätigungsvorrichtung, mit der die Arretiervorrichtung betätigt werden kann, kann sich im Bereich der Arretiervorrichtung befinden. Die Handbetätigungsvorrichtung kann aber auch beabstandet zu der Arretiervorrichtung angeordnet sein. Beispielsweise wird zum Lösen der Arretierung für das Verschwenken der Rückenlehne häufig ein Handhebel vorgesehen, der in einem oberen Bereich der Rückenlehne angeordnet ist. Die Bewegung des Handhebels wird mechanisch an die Verriegelungseinrichtung übertragen, beispielsweise durch einen Bowdenzug. In dieser Weise wird durch das Betätigen des Handhebels das Verriegelungselement gelöst, beispielsweise die Verriegelungsklinke aus dem Eingriff in das Verriegelungsrad gelöst. Aufgrund der direkten mechanischen Kopplung muss der Benutzer, der den Fahrzeugsitz verstellen möchte, zum Lösen der Arretierung eine Handkraft aufbringen, die zum (mechanischen) Lösen der Arretiervorrichtung ausreicht.

Fahrzeugsitze, bei denen eine Arretierung gelöst wird, indem eine an einer Handbetätigungsvorrichtung aufgebrachte Handkraft über einen Bowdenzug übertragen wird, sind beispielsweise aus den deutschen Gebrauchsmustern DE 20 2014 104 868 U1, DE 20 2015 103 395 U1 und DE 20 2011 107 840 U1 bekannt.

Die Druckschrift DE 10 2004 050 773 A1 offenbart einen Fahrzeugsitz, welcher ein Sitzteil und eine Rückenlehne aufweist. Das Sitzteil und die Rückenlehne sind jeweils unabhängig voneinander um eine Fahrzeugquerachse verschwenkbar an einem Rahmen gelagert. Eine Verriegelung der Schwenkstellungen des Sitzteiles und der Rückenlehne erfolgt jeweils über eine Verriegelungseinrichtung. Die beiden Verriegelungseinrichtungen können gegen die Beaufschlagung einer Feder durch einen Bowdenzug gelöst werden, um bedarfsgerecht ein Verschwenken des Sitzteiles und/oder der Rückenlehne zu ermöglichen. Die Kräfte zum Lösen der Verriegelungseinrichtungen müssen manuell vom Benutzer aufgebracht werden, was durch manuelle Betätigung eines Griffes erfolgen kann. Möglich ist auch, dass durch eine Verschwenkung der Rückenlehne über den mit der Rückenlehne mechanisch gekoppelten Bowdenzug die Verriegelungseinrichtung des Sitzteiles gelöst wird. Mit dem Lösen der Verriegelungseinrichtung des Sitzteiles wird infolge einer Feder oder Gasdruckfeder, deren Wirkung mit dem Lösen der Verriegelungseinrichtung freigegeben wird, automatisch das Sitzteil hochgeklappt, um Platz für die Rückenlehne zu schaffen, sodass diese nach vorne in eine horizontale Ausrichtung geklappt werden kann.

Die Druckschrift DE 20 2006 008 821 U1 beschreibt verschiedene Ausführungsformen einer Fahrzeugsitzverstellung mit einem Planetengetriebe, dessen Sonnenrad mit einem elektrischen Antrieb gekoppelt ist, während der Planetenträger mit einem Sitzelement eines Fahrzeugsitzes gekoppelt ist. Über eine Verriegelungseinrichtung ist ein Hohlrad des Planetengetriebes fixiert, sodass durch Betrieb des elektrischen Antriebes eine elektrische Verstellung des Sitzelementes des Fahrzeugsitzes möglich ist. Um bei einem Stromausfall auch eine manuelle Verstellung des Sitzelementes des Fahrzeugsitzes zu ermöglichen, ist ein Lösen der Verriegelungseinrichtung des Hohlrades erforderlich, womit erreicht werden kann, dass bei über den elektrischen Antrieb fixiertem oder gebremstem Sonnenrad eine freie Bewegung der an dem Planetenträger gelagerten Planeten mit dem Hohlrad und damit eine freie manuelle Verschwenkung des Sitzelementes möglich ist. Das Lösen der Verriegelungseinrichtung des Hohlrades erfolgt über ein manuelles Verschwenken eines Handhebels, der im oberen Bereich einer Sitzlehne angeordnet ist. Der Handhebel ist über einen Bowdenzug mechanisch mit der Verriegelungseinrichtung des Hohlrades gekoppelt.

Weiterer Stand der Technik ist aus DE 10 2015 100 921 A1 bekannt.

### AUFGABE DER ERFINDUNG

Der Erfindung liegt die Aufgabe zugrunde, eine Fahrzeugsitz-Löseeinrichtung bereitzustellen, die ein Lösen einer Arretiervorrichtung eines Fahrzeugsitzes unter Beachtung der Bauraumbedingungen und/oder des Bedienkomforts erlaubt. Des Weiteren liegt der Erfindung die Aufgabe zugrunde, eine entsprechend verbesserte Fahrzeugsitzarretierung vorzuschlagen. Schließlich widmet sich die Erfindung einer Verbesserung eines Fahrzeugsitzes.

### LÖSUNG

Die Aufgabe der Erfindung wird erfindungsgemäß mit den Merkmalen der unabhängigen Patentansprüche gelöst. Weitere bevorzugte erfindungsgemäße Ausgestaltungen sind den abhängigen Patentansprüchen zu entnehmen.

### BESCHREIBUNG DER ERFINDUNG

Die Erfindung betrifft eine Fahrzeugsitz-Löseeinrichtung mit einem Stellaggregat, einem Bowdenzug und einem Arretierelement, die in mechanischer Reihenschaltung miteinander verbunden sind. Durch eine Betätigung des Bowdenzugs ist das Arretierelement von einer Arretierstellung, in der keine Verstellung des Fahrzeugsitzes möglich ist, in eine Lösestellung, in der eine Verstellung des Fahrzeugsitzes möglich ist, und/oder von der Lösestellung in die Arretierstellung bringbar.

Die Fahrzeugsitz-Löseeinrichtung dient dem Lösen, also dem Entarretieren, eines Fahrzeugsitzes, so dass ein Verstellen des Fahrzeugsitzes möglich ist. Bei dem Verstellen kann es sich um ein Verschieben des Fahrzeugsitzes, ein Verschwenken einer Rückenlehne des Fahrzeugsitzes, eine Höhenverstellung des Fahrzeugsitzes, ein Drehen des Fahrzeugsitzes um die Hochachse oder ein anderweitiges Verstellen des Fahrzeugsitzes oder eine beliebige andere Verstellung oder auch um eine Kombination unterschiedlicher Verstellungen handeln.

Das Arretierelement kann unmittelbar selbst ein Teil einer Arretiervorrichtung des Fahrzeugsitzes sein. Beispielsweise kann es sich um eine Verriegelungsklinke handeln, die in ein Verriegelungselement eingreift und während ihres Eingriffs den Fahrzeugsitz gegen ein Verstellen sperrt. Das Arretierelement kann aber auch ein Übertragungselement sein, das nicht selbst Teil der Arretiervorrichtung ist, sondern mechanisch mit einem Element der Arretiervorrichtung gekoppelt ist. Dabei können Arretierelement und Element der Arretiervorrichtung fest miteinander verbunden sein, aber auch beispielsweise so miteinander gekoppelt sein, dass eine Bewegung des Arretierelements auf das Element der Arretiervorrichtung übertragen wird, aber eine Bewegung des Elements der Arretiervorrichtung nicht auf das Arretierelement übertragen wird, oder so, dass eine Übertragung nur für Teilbewegungen eines der beiden Elemente stattfindet. Das Arretierelement kann auch Teil eines Übertragungsgetriebes sein oder an ein Übertragungsgetriebe gekoppelt sein, das das Element der Arretiervorrichtung antreibt.

Wenn hier und im Folgenden von "Arretieren" die Rede ist, dann ist damit jede Form des Festlegens gegen ein Verstellen gemeint. Dabei kann es sich vorzugsweise um ein Verriegeln oder Verrasten handeln, aber auch beispielsweise um ein reibschlüssiges Arretieren.

Eine Arretierkraft, die das Arretierelement und damit die Arretiervorrichtung betätigt, wird von dem Stellaggregat erzeugt und über den Bowdenzug auf das Arretierelement übertragen.

Das Stellaggregat ist insbesondere ein Stellaggregat, das nicht über eine Handkraft eines Benutzers angetrieben wird, sondern über eine externe Energiequelle, also mit Fremdenergie betrieben wird. Eine Nutzung der externen Energiequelle für die Betätigung der Fahrzeugsitz-Löseeinrichtung ist besonders vorteilhaft, da nicht (allein) manuell von dem Benutzer die (Hand-) Kraft für die Veranlassung der Bewegung des Arretierelements aufgebracht werden muss, sondern diese zumindest teilweise von der externen Energiequelle aufgebracht wird.

Der Bowdenzug ist (unmittelbar oder mittelbar) an einem Ende so an das Stellaggregat gekoppelt, dass die Betätigung des Stellaggregats den Bowdenzug betätigt. Dabei kann der Bowdenzug auf Druck betätigt werden. Vorzugsweise wird der Bowdenzug aber (allein oder auch) auf Zug betätigt, da Bowdenzüge besonders für die effektive Übertragung von Zugkräften ausgelegt sind. Der Bowdenzug ist an seinem anderen Ende (unmittelbar oder mittelbar) mechanisch mit dem Arretierelement gekoppelt, so dass die von der externen Energiequelle aufgebrachte Arretierkraft von dem Stellaggregat auf das Arretierelement übertragen wird.

Der Bowdenzug ist ein flexibles Kraftübertragungselement, das die Arretierkraft über beliebige Entfernungen und beliebig zu wählende Strecken, insbesondere auch um Kurven übertragen kann. Dadurch kann das Stellaggregat in beliebiger Position gegenüber dem Arretierelement vorgesehen werden. Es ist nicht notwendig, dass sich Stellaggregat und Arretierelement in unmittelbarer Nähe befinden oder dass die Kraftübertragung zwischen ihnen beispielsweise auf geradlinigem Weg erfolgen muss. Dies bedeutet, dass das Stellaggregat an dem Fahrzeugsitz an beliebiger Stelle montiert werden kann. Dies ist deswegen besonders vorteilhaft, weil dadurch eine besonders gute Raumausnutzung erfolgen kann. Das Stellaggregat kann bspw. außerhalb des Fahrzeugsitzes oder in oder an der Rückenlehne des Fahrzeugsitzes oder anderweitig in oder an dem Fahrzeugsitz oder einer Sitzkonsole an einer Position angebracht werden, an der die sonstige Konstruktion des Fahrzeugsitzes dies erlaubt. Die Kraftübertragung von dem Stellaggregat auf das Arretierelement erfolgt ausschließlich durch den Bowdenzug, der ein in sich geschlossenes Kraftsystem bilden kann. Andererseits schützt die Hülle des Bowdenzugs die darin angeordnete Seele auf dem mittels des Bowdenzugs überbrückten Übertragungsweg.

Für die Ausbildung des Stellaggregats gibt es vielfältige Möglichkeiten, wobei in jedem Fall dieses mittels einer externen Energiequelle betrieben wird und eine manuelle Auslösung der Nutzung der Energie der externen Energiequelle für die Erzeugung der Betätigungskraft möglich ist. Beispielsweise kann es sich bei dem Stellaggregat um ein elektrisch betriebenes Stellaggregat handeln, so dass die externe Energiequelle beispielsweise eine Batterie, ein Akkumulator oder ein Generator sein kann.

Für eine bevorzugte Ausgestaltung der Erfindung ist das Stellaggregat ein pneumatisches Stellaggregat. In diesem Fall ist die externe Energiequelle eine Druckluftquelle oder-versorgung. Unter Umständen kann hierbei ausgenutzt werden, dass Fahrzeuge wie Nutzfahrzeuge ohnehin eine pneumatische Druckluftversorgung aufweisen, die im Rahmen der Erfindung dann auch für die Fahrzeugsitz-Löseeinrichtung genutzt werden kann. Dabei kann es sich um eine allgemeine Druckluftversorgung für das Fahrzeug handeln, beispielsweise für Bremsen und/oder eine Federung, aber auch für eine Türöffnung, eine Fahrzeugsitzfederung, eine Kabinenfederung oder eine Spiegelverstellung, wobei gegebenenfalls die Druckluftversorgung mehrere Verbraucherkreise und Nebenverbraucherkreise mit Druckluft versorgt. Es kann sich aber auch um eine lokale Druckluftversorgung handeln, die ohnehin und ausschließlich für den Fahrzeugsitz genutzt wird, bspw. für eine Federung des Fahrzeugsitzes oder mehrerer Fahrzeugsitze. In diesem Fall kann als Druckluftquelle auch ein Kompressor dienen, der Bestandteil des oder eines Fahrzeugsitzes ist.

Der Benutzer betätigt in beliebiger Weise das Stellaggregat, beispielsweise indem er einen elektrischen oder pneumatischen Schaltkreis über einen Schalter schließt oder umschaltet. Wenn das Stellaggregat ein pneumatisches Stellaggregat ist, kann das pneumatische Stellaggregat über eine manuell betätigte Ventileinheit betätigbar sein. Die Ventileinheit kann ein Ventil oder mehrere Ventile aufweisen. Wenn im Folgenden "das Ventil" näher beschrieben wird, kann es sich dabei auch um eines mehrerer Ventile der Ventileinheit handeln, wobei die mehreren Ventile gleich oder unterschiedlich ausgebildet sein können. Das Ventil kann ein Ventil beliebigen Typs sein, das beliebige Stellungen und Anschlüsse aufweist. Insbesondere kann es sich um ein Schieberventil oder ein Sitzventil oder Tellerventil handeln.

Die Ventileinheit kann in beliebiger Weise manuell betätigt werden. Beispielsweise kann die Ventileinheit über ein Handbetätigungsorgan wie einen Druckknopf oder Zugknopf, einen Schalter, einen Hebel, einen Hahn oder in anderer Weise betätigt werden. Dabei kann entweder durch die manuelle Betätigung die Ventileinheit direkt mechanisch betätigt werden, oder die manuelle Betätigung erfolgt elektrisch, wobei eine Ventilstellung durch einen Elektromagneten verändert wird, der durch die manuelle Betätigung elektrisch betätigt wird. Das Handbetätigungsorgan kann daher auch so mechanisch oder elektrisch mit anderen Bauteilen der Ventileinheit wie insbesondere dem Ventil oder den Ventilen verbunden sein, dass das Handbetätigungsorgan beabstandet von Teilen oder allen der anderen Bauteile angeordnet werden kann. In dieser Weise kann die Ventileinheit oder wenigstens das Handbetätigungsorgan an einer leicht zugänglichen Stelle an dem Fahrzeugsitz oder in der Umgebung des Fahrzeugsitzes positioniert sein. Insbesondere kann die Ventileinheit oder wenigstens das Handbetätigungsorgan etwa an einer Oberseite des Fahrzeugsitzes oder in einem Seitenbereich des Fahrzeugsitzes, bevorzugt in einem oberen Seitenbereich des Fahrzeugsitzes, positioniert sein.

Durch die manuelle Betätigung der Ventileinheit ist die für die manuelle Betätigung aufzuwendende Kraft entkoppelt von der erforderlichen Arretierkraft. Für die manuelle Betätigung der Ventileinheit muss nur die Kraft aufgewandt werden, die das jeweilige Betätigungsorgan zur Betätigung benötigt. Auch muss die Ventileinheit lediglich in pneumatischer Verbindung mit dem pneumatischen Stellaggregat stehen. Somit ist es nicht notwendig, dass die Betätigung direkt an dem Stellaggregat erfolgt. Wenn also das Handbetätigungsorgan der Ventileinheit an einer leicht zugänglichen Stelle angebracht ist, kann das Stellaggregat trotzdem an einer vorteilhaften anderen Position, insbesondere innerhalb des Fahrzeugsitzes, angebracht sein. Wenn die manuelle Betätigung nicht direkt an dem Ventil oder den Ventilen, sondern über ein beabstandet angeordnetes Handbetätigungsorgan erfolgt, gilt dies auch für das Ventil oder die Ventile, wobei Ventil oder Ventile und Stellaggregat nicht notwendigerweise gemeinsam positioniert werden müssen, sondern beabstandet angeordnet sein können. Möglich ist aber durchaus, dass die Ventileinheit und das pneumatische Stellaggregat unmittelbar benachbart zueinander angeordnet sind, aneinander befestigt oder angeflanscht sind oder in eine Baueinheit integriert sind.

Im Rahmen der Erfindung wird ausgenutzt, dass aus anderen Fachgebieten bereits bekannt ist, eine Kraft einer Bewegung eines hydraulisch oder pneumatisch bewegten Kolbens in einem hydraulischen oder pneumatischen Zylinder mechanisch auf ein räumlich entferntes zu betätigendes Element zu übertragen: Gemäß der deutschen Gebrauchsmusterschrift DE 202 18 008 U1 wird beispielsweise eine Kolbenbewegung in einem fluidischen Linearantrieb mittels Bowdenzügen auf Greif- oder Klemmmittel einer Spannvorrichtung übertragen. Die deutsche Patentanmeldung DE 37 28 297 offenbart die Übertragung einer Kolbenbewegung in einem Federspeicherzylinder über einen Bowdenzug auf eine Bremszange für eine Bremse verschiedener Fahrzeuge. Die britische Patentanmeldung GB 11972 offenbart eine Übertragung einer Bewegung eines hydraulischen Überdruckkolbens auf einen Überdruckanzeiger mittels eines Bowdenzugs. Erfindungsgemäß wird die an sich bekannte Erzeugung einer Betätigungskraft über ein fluidisches Stellaggregat und deren Übertragung mittels eines Bowdenzugs an ein zu betätigendes Element erstmals übertragen auf einen Fahrzeugsitz mit den dort vorherrschenden besonderen Bauraumerfordernissen.

In einer konstruktiven Ausgestaltung der Erfindung weist der Bowdenzug eine Seele und eine Hülle auf. Dies entspricht grundsätzlich einer normalen Bauform eines Bowdenzugs. Das Arretierelement ist dann mechanisch mit einem ersten Endbereich der Seele gekoppelt. Das Stellaggregat weist einen pneumatisch beaufschlagten Kolben und ein Zylindergehäuse auf, wobei der Kolben je nach pneumatischer Beaufschlagung in dem Zylindergehäuse in eine erste Arbeitsstellung und in eine zweite Arbeitsstellung bringbar ist. Die Seele des Bowdenzugs ist in einem zweiten Endbereich mechanisch mit dem Kolben gekoppelt, so dass je nach pneumatischer Beaufschlagung des Stellaggregats infolge einer Bewegung des Kolbens aus der ersten Arbeitsstellung in die zweite Arbeitsstellung das Arretierelement in die Lösestellung bringbar ist.

Es ist möglich, dass der Kolben die erste Arbeitsstellung einnimmt, wenn das pneumatische Stellaggregat belüftet ist, und die zweite Arbeitsstellung einnimmt, wenn das pneumatische Stellaggregat entlüftet ist. Es kann aber vorteilhaft sein, wenn der Kolben die erste Arbeitsstellung einnimmt, wenn das pneumatische Stellaggregat entlüftet ist, und die zweite Arbeitsstellung einnimmt, wenn das pneumatische Stellaggregat belüftet ist. In diesem Fall wird das Arretierelement in die Lösestellung gebracht, wenn das pneumatische Stellaggregat belüftet wird. Dies kann vorteilhaft sein, damit eine Belüftung des pneumatischen Stellaggregats nur dann notwendig ist, wenn das Arretierelement in die Lösestellung gebracht und dort gehalten werden soll, d. h. wenn ein Verstellen des Fahrzeugsitzes möglich sein soll. Dies ist deswegen vorteilhaft, weil ein Verstellen des Fahrzeugsitzes in einer gesamten Zeitdauer der Nutzung des Fahrzeugsitzes einen wesentlich geringeren zeitlichen Anteil aufweisen wird als die Benutzung des Fahrzeugsitzes, ohne irgendein Verstellen vorzunehmen. Bei dem Verstellen des Fahrzeugsitzes handelt es sich um einen zeitlich beschränkten Eingriff. Es ist daher effektiv, diesen Eingriff mit dem energetisch aufwändigeren Zustand, d. h. der Belüftung des pneumatischen Stellaggregats, zu verbinden.

Die Seele des Bowdenzugs kann in dem mit dem Kolben gekoppelten zweiten Endbereich ein Koppelelement aufweisen, und der Kolben kann eine Kolbenstange aufweisen, an der eine Aufnahme gehalten ist, in der das Koppelelement so aufgenommen ist, dass das Koppelelement zumindest bei auf die Seele wirkenden Zugkräften in Längsrichtung der Kolbenstange an der Aufnahme abgestützt ist. Das Koppelelement kann insbesondere auf die Seele aufgepresst sein. Es kann aber auch einstückig mit der Seele ausgebildet oder stoffschlüssig oder über eine Schraube oder einen Stift oder in anderer Weise kraftschlüssig mit der Seele verbunden sein. Das Koppelelement kann beispielsweise zylindrisch oder quaderförmig, insbesondere kubisch, sein. Insbesondere kann das Koppelelement kugelförmig sein.

Die Aufnahme kann das Koppelelement dazu vollständig umschließen, wobei die Seele nur durch eine Ausnehmung der Aufnahme hindurchgeführt ist. Die Aufnahme kann aber auch an einer oder mehreren Seiten des Koppelelements offen oder nach Art eines Käfigs ausgebildet sein. Dabei kann insbesondere auch die Ausnehmung, durch die die Seele in die Aufnahme hineingeführt wird, randoffen sein. In dieser Weise kann die Seele mit dem Koppelement einfach in die Aufnahme hineingeschoben werden. Es kann aber vorteilhaft sein, an der Aufnahme eine Sicherungsvorrichtung vorzusehen, die verhindert, dass die Seele durch die nicht-geschlossene Seite(n) und die randoffene Ausnehmung wieder aus der Aufnahme hinausrutscht. Dazu kann die Aufnahme auch zweiteilig ausgebildet sein.

Wenn das Koppelelement eine Kugel ist, kann die Aufnahme mit dem Koppelelement ein Kugelgelenk bilden. Die Aufnahme kann die Kugel dazu ganz oder teilweise umschließen. Die Kugel ist somit in dem Kugelgelenk drehbar. Wenn also beispielsweise die Seele nicht in der Längsrichtung der Kolbenstange auf Zug belastet wird, sondern Zugkräfte unter einem Winkel zu der Längsrichtung wirken, ist die Kraftübertragung zwischen dem Kugelgelenk und somit dem Kolben auf der einen Seite und der Kugel und somit der Seele auf der anderen Seite trotzdem ideal, da die Kugel und das Kugelgelenk weiterhin mit der gesamten oder zumindest einem wesentlichen Teil der belasteten Kugeloberfläche aneinander anliegen und mittels des Kugelgelenks auch unterschiedliche Winkelstellungen zwischen Seele und Kugel einerseits und der Aufnahme andererseits ermöglicht werden.

Es ist möglich, dass das pneumatische Stellaggregat ein doppelt wirkendes Stellaggregat ist, d. h. zwei pneumatische Anschlüsse aufweist, so dass der Kolben durch pneumatische Beaufschlagung wahlweise auf seiner einen oder anderen Seite zwischen den Arbeitsstellungen bewegt werden kann. Das pneumatische Stellaggregat kann aber eine Rückstellfeder aufweisen, mit der eine Rückstellung des Kolbens aus der zweiten Arbeitsstellung in die erste Arbeitsstellung zumindest unterstützt wird. Dies kann insbesondere dann der Fall sein, wenn das pneumatische Stellaggregat nur einen pneumatischen Anschluss aufweist, so dass das pneumatische Stellaggregat nur entweder belüftet oder entlüftet werden kann. In diesem Fall kann durch die Belüftung der Kolben aus der ersten Arbeitsstellung in die zweite Arbeitsstellung gebracht werden und über die Rückstellfeder der Kolben aus der zweiten Arbeitsstellung in die erste Arbeitsstellung zurückgestellt werden. Vorzugsweise ist die Rückstellfeder auf einer von einer Kolbenstange abgewandten Seite des Kolbens angeordnet. Wenn sich ein pneumatischer Anschluss des pneumatischen Stellaggregats auf der Seite des Kolbens mit der Kolbenstange befindet, kann die Rückstellfeder eine Druckfeder sein. Wenn umgekehrt die der Kolbenstange abgewandte Seite des Kolbens pneumatisch beaufschlagt werden kann, kann die Rückstellfeder eine Zugfeder sein.

Die Rückstellfeder kann zumindest teilweise in einer Ausnehmung der Kolbenstange und/oder des Kolbens angeordnet sein. Wie weit die Rückstellfeder dabei in der Ausnehmung angeordnet ist, kann von der Stellung des Kolbens abhängig sein. Beispielsweise kann die Rückstellfeder ganz innerhalb der Ausnehmung angeordnet sein, wenn sich der Kolben in seiner einen Endstellung befindet, wobei dieser dann sogar an einer ersten Wand des Zylindergehäuses anliegen kann. Je weiter sich der Kolben von dieser ersten Endstellung in Richtung auf seine zweite Endstellung bewegt, in der er an einer zweiten Wand des Zylindergehäuses anliegen kann, desto weiter tritt die Rückstellfeder aus der Ausnehmung heraus. Dabei kann die erste Endstellung der ersten Arbeitsstellung oder der zweiten Arbeitsstellung und die zweite Endstellung der zweiten Arbeitsstellung oder der ersten Arbeitsstellung des Kolbens entsprechen. Dies ist abhängig von einer mechanischen Kopplung zwischen Stellaggregat und Bowdenzug, Bowdenzug und Arretierelement und Arretierelement und Arretiervorrichtung, sowie eine Wirkweise der Arretiervorrichtung und des Stellaggregats. Durch die erfindungsgemäßen Maßnahmen kann eine besonders kompakte Ausgestaltung der Fahrzeugsitz-Löseeinrichtung geschaffen werden.

Die Ventileinheit kann ein 3/2-Wege-Ventil sein oder ein 3/2-Wege-Ventil aufweisen. Ein solches 3/2-Wege-Ventil weist eine Belüftungsstellung und eine Entlüftungsstellung auf. Befindet sich das 3/2-Wege-Ventil in seiner Entlüftungsstellung, ist auch das pneumatische Stellaggregat entlüftet. Dies kann einen Normalzustand der Fahrzeugsitz-Löseeinrichtung darstellen, in dem sich die Fahrzeugsitz-Löseeinrichtung die meiste Zeit befindet, nämlich immer dann, wenn keine Verstellung des Fahrzeugsitzes vorgenommen werden soll. Auf eine Betätigung hin kann das 3/2-WegeVentil in die Belüftungsstellung gebracht werden, wodurch auch das pneumatische Stellaggregat belüftet wird. Somit ist das Belüften die Ausnahme, die nur dann benötigt wird, wenn der Fahrzeugsitz verstellt werden soll. 3/2-Wege-Ventile stellen Standardventile dar, welche zu geringen Kosten hergestellt oder bezogen werden können.

Die Ventileinheit und das pneumatische Stellaggregat können pneumatisch so gekoppelt sein und die Seele des Bowdenzugs und das Arretierelement mechanisch so gekoppelt sein, dass bei einer Betätigung der Ventileinheit das Arretierelement in die Lösestellung gebracht wird und bei einem Loslassen des Betätigungselements das Arretierelement in die Arretierstellung gebracht wird. Das kann also beispielsweise folgende Wirkkette bedeuten: Die Ventileinheit wird betätigt, so dass das pneumatische Stellaggregat belüftet wird. Das Belüften des pneumatischen Stellaggregats führt dazu, dass der Kolben in die erste Arbeitsstellung gebracht wird. Dadurch wird die Seele des Bowdenzugs auf Zug betätigt, so dass das Arretierelement in die Lösestellung gebracht wird. Beim Loslassen kann dann entweder durch die Ventileinheit das Belüften des pneumatischen Stellaggregats so umgeschaltet werden, dass der Kolben in die entgegengesetzte Richtung pneumatisch beaufschlagt wird, soweit es sich um ein doppelt wirkendes Stellaggregat handelt. In diesem Fall kann die entstehende Beaufschlagung des Bowdenzugs auf Druck ausreichen, um das Arretierelement in die Arretierstellung zu bringen. Es kann auch ein unterstützendes Rückstellelement, beispielsweise eine Rückstellfeder, auf das Arretierelement wirken und es zurück in die Arretierstellung bringen, sobald der Zug durch den Bowdenzug entfällt. Es ist aber auch möglich, dass durch das Loslassen die Ventileinheit in die Entlüftungsstellung gebracht wird, so dass das pneumatische Stellaggregat, wenn es sich um ein einfach wirkendes Stellaggregat handelt, entlüftet wird. In diesem Fall kann eine Rückstellfeder, die auf den Kolben wirkt, den Kolben zurück in die erste Arbeitsstellung bringen. Die Wirkung im weiteren Kraftfluss, d. h. dem Bowdenzug und an dem Arretierelement, ist dann gleich wie vorhergehend beschrieben. Eine Rückstellfeder kann zusätzlich oder alternativ auch an anderer beliebiger Stelle im Kraftfluss zwischen dem Stellaggregat und der Arretiervorrichtung und sogar in der Arretiervorrichtung selbst vorhanden sein.

Eine weitere Lösung der der Erfindung zugrunde liegenden Aufgabe stellt eine Fahrzeugsitz-Arretierung dar, die eine Arretiervorrichtung und eine Fahrzeugsitz-Löseeinrichtung wie im Vorhergehenden beschrieben aufweist. Die Arretiervorrichtung ist mit dem Arretierelement der Fahrzeugsitz-Löseeinrichtung gekoppelt und über dieses lösbar ist. Die Arretiervorrichtung weist ein mit einem verstellbaren Teil des Fahrzeugsitzes fest verbundenes Verriegelungselement und ein in das Verriegelungselement eingreifendes Eingriffselement auf. Das Arretierelement der Fahrzeugsitz-Löseeinrichtung ist mit dem Eingriffselement gekoppelt.

Eine herkömmliche Fahrzeugsitzarretierung, die keine erfindungsgemäße Fahrzeugsitz-Löseeinrichtung aufweist, kann unter Umständen durch das Nachrüsten einer erfindungsgemäßen Fahrzeugsitz-Löseeinrichtung zu einer erfindungsgemäßen Fahrzeugsitzarretierung aufgerüstet möglich.

Das Koppeln der Arretiervorrichtung mit dem Arretierelement kann wie oberhalb beschrieben direkt oder indirekt erfolgen. Das Verriegelungselement kann ein Verriegelungsrad oder eine Verriegelungsstange sein, das oder die mindestens eine Verriegelungsausnehmung oder mindestens einen Zahn aufweist. Das Eingriffselement kann in die Verriegelungsausnehmung oder zwischen benachbarte Zähne eingreifen, wobei das Verriegelungselement auch selbst Zähne aufweisen kann. Das Verriegelungselement kann durch eine geradlinige Bewegung in der Ebene des Verriegelungselements oder unter einem Winkel, vorzugsweise senkrecht zu der Ebene, in das Verriegelungselement eingreifen. Es kann aber auch schwenkbar sein und durch das Verschwenken in den Eingriff mit dem Verriegelungselement und aus diesem hinaus bewegt werden. Es ist möglich, dass das Verriegelungselement mit dem Eingriffselement nur in einer Stellung ein Arretieren erlaubt, d. h. nur zwischen Arretieren und Lösen umschalten kann. Es ist aber auch möglich, dass das Verriegelungselement mehrere Möglichkeiten für den Eingriff des Eingriffselement aufweist, z. B. mehrere Zähne oder Ausnehmungen, sodass Arretieren für mehrere Stellpositionen möglich ist.

Es ist möglich, dass die Rückenlehne und ein Sitzteil des Fahrzeugsitzes gemeinsam der bewegliche Teil des Fahrzeugsitzes sind, beispielsweise für ein Verschieben oder eine Höhenverstellung oder ein Drehen des Fahrzeugsitzes (z. B. gegenüber einer Sitzkonsole als unbeweglichem Teil). In einem Ausführungsbeispiel kann es sich bei dem verstellbaren Teil des Fahrzeugsitzes um die Rückenlehne handeln, an der als Verriegelungselement ein Verriegelungsrad fest verbunden ist. Das Eingriffselement kann in diesem Beispiel eine Verriegelungsklinke sein, die schwenkbar entweder an dem Sitzteil oder anderweitig ortsfest zu der Achse, um die die Rückenlehne verschwenkt werden kann, angebracht sein kann.

Zusätzlich zu der Fahrzeugsitz-Löseeinrichtung kann auch eine Handbetätigungsvorrichtung vorhanden sein, mit der die Arretiervorrichtung manuell mechanisch betätigt werden kann, so dass die Arretiervorrichtung wahlweise über die Handbetätigungsvorrichtung oder über die Fahrzeugsitz-Löseeinrichtung betätigt werden kann. Die Handbetätigungsvorrichtung und die Fahrzeugsitz-Löseeinrichtung wirken dabei auf parallelen mechanischen Pfaden auf das Eingriffselement ein. Dieselbe Arretiervorrichtung kann also auf zwei verschiedene Arten betätigt werden. Dies ist von Vorteil, wenn sowohl Situationen auftreten können, in denen der Fahrzeugsitz verstellt werden soll und die externe Energiequelle zur Verfügung steht, als auch Situationen, in denen der Fahrzeugsitz verstellt werden soll und die externe Energiequelle nicht zur Verfügung steht. Dies kann z. B. der Fall sein, wenn die externe Energiequelle mit einem Antrieb des Fahrzeugs gekoppelt ist und daher nicht zur Verfügung steht, wenn der Antrieb ausgeschaltet ist. Dabei kann es sich beispielsweise um beim Fahren rückgewonnene elektrische Energie handeln, die im Stillstand des Fahrzeugs nicht zur Verfügung steht. Möglich ist aber auch, dass eine Druckluftversorgung vor dem Starten der Brennkraftmaschine nicht zur Verfügung steht, aber dennoch eine Verstellung des Fahrzeugsitzes erfolgen soll. Ein Betätigen der Arretiervorrichtung wahlweise auch über die Handbetätigungsvorrichtung kann aber auch dann vorteilhaft sein, wenn die externe Energiequelle ausgefallen ist. Dabei kann es zum einen aus Komfortgründen vorteilhaft sein, wenn auch bei ausgefallener externer Energiequelle das Verstellen des Fahrzeugsitzes noch möglich ist. Es kann sich aber auch um einen Sicherheitsaspekt handeln, wenn beispielsweise der Fahrzeugsitz verschoben oder seine Rückenlehne verschwenkt werden muss, um einen Fluchtweg aus dem Fahrzeug freizugeben. Möglicherweise kann über die alternative Bereitstellung der Betätigung über die Handbetätigungsvorrichtung und die Fahrzeugsitz-Löseeinrichtung auch eine alternative Betätigung an unterschiedlichen Positionen an dem Fahrzeugsitz ermöglicht werden.

Die Handbetätigungsvorrichtung kann einen Handhebel aufweisen, der mit dem Eingriffselement gekoppelt ist. In einfachster Weise kann der Handhebel dabei mit dem Eingriffselement fest verbunden sein. Wenn also das Eingriffselement beispielsweise eine Verstellklinke ist, dann kann durch Verschwenken des Handhebels die Verstellklinke um dieselbe Schwenkachse verschwenkt und aus dem Eingriff mit dem Verriegelungselement gebracht bzw. durch Verschwenken in die Gegenrichtung wieder in den Eingriff gebracht werden. Zwischen Handhebel und Eingriffselement kann aber auch ein Getriebe oder ein anderweitiger Übertragungsmechanismus angebracht sein, mit dem die Bewegung des Handhebels auf das Eingriffselement übertragen wird.

Die Arretiervorrichtung kann über einen Hub der Handbetätigungsvorrichtung von der Fahrzeugsitz-Löseeinrichtung entkoppelt sein. In dieser Weise kann es möglich sein, dass die Handbetätigungsvorrichtung betätigt wird und der Fahrzeugsitz verstellt wird, ohne dass eine Kraft auf die Fahrzeugsitz-Löseeinrichtung wirkt oder die Betriebsstellung derselben verändert wird. Wäre dies nicht der Fall, so könnte entweder die Fahrzeugsitz-Löseeinrichtung der Handbetätigung erschwerend entgegenwirken, weil die gesamte mechanische Reihenschaltung von dem Arretierelement über den Bowdenzug bis zum Stellaggregat mit der Handbetätigungsvorrichtung bewegt werden müsste. Zum anderen könnte die Fahrzeugsitz-Löseeinrichtung durch die Handbetätigung auch Schaden nehmen, wenn sie entgegen ihrer Wirkungsrichtung mit Kraft beaufschlagt wird. Es ist daher vorteilhaft, wenn die Handbetätigungsvorrichtung betätigt werden kann, ohne dass die Fahrzeugsitz-Löseeinrichtung entgegen ihrer Wirkrichtung mit betätigt wird. Dazu können beispielsweise das Arretierelement und die Arretiervorrichtung mit Spiel miteinander verbunden sein, so dass sich die Betriebsstellung der Arretiervorrichtung in einem Maß verändern kann, das dem Hub der Handbetätigungsvorrichtung entspricht, ohne dass das Arretierelement mit bewegt wird. Umgekehrt kann dies bedeuten, dass ein Teilhub der Fahrzeugsitz-Löseeinrichtung aufgewandt werden muss, um das Arretierelement und die Arretiervorrichtung in Wirkverbindung zu bringen, indem beispielsweise zunächst das Spiel überwunden werden muss.

Möglich ist, dass eine Betätigung der Arretiervorrichtung ausschließlich über eine einzige Fahrzeugsitz-Löseeinrichtung, ggf. gemeinsam mit einer Handbetätigungsvorrichtung, erfolgt. Für einen weiteren Vorschlag der Erfindung ist zusätzlich zu einer ersten Fahrzeugsitz-Löseeinrichtung, mit der das Arretierelement in die Lösestellung bringbar ist, eine zweite Fahrzeugsitz-Löseeinrichtung, mit der das Arretierelement in die Arretierstellung bringbar ist, eingesetzt. Grundsätzlich können beide Fahrzeugsitz-Löseeinrichtungen jeweils ein eigenes Arretierelement aufweisen, wobei die beiden Arretierelemente miteinander fest oder über ein Getriebe gekoppelt sein können. Vorteilhaft ist es aber, wenn beide Fahrzeugsitz-Löseeinrichtungen auf dasselbe Arretierelement einwirken. Die Fahrzeugsitz-Löseeinrichtungen können verschieden ausgebildet sein. Einfacher umzusetzen ist aber, dass die beiden Fahrzeugsitz-Löseeinrichtungen prinzipiell gleich aufgebaut sind. Mindestens muss aber an einer Stelle ihre Wirkung umgekehrt sein. Wenn beispielsweise beide Fahrzeugsitz-Löseeinrichtungen einfach wirkende pneumatische Stellaggregate mit einem Zylindergehäuse und einem pneumatisch beaufschlagten Kolben aufweisen, dann kann der Kolben der ersten Fahrzeugsitz-Löseeinrichtung seine zweite Arbeitsstellung einnehmen (so dass das Arretierelement in die Lösestellung gebracht wird), wenn das erste pneumatische Stellaggregat belüftet ist. Der Kolben der zweiten Fahrzeugsitz-Löseeinrichtung kann hingegen seine erste Arbeitsstellung einnehmen (so dass das Arretierelement in die Arretierstellung gebracht wird), wenn das zweite pneumatische Stellaggregat belüftet wird.

Die Stellaggregate können jeweils individuell betätigbar sein, beispielsweise indem jedes pneumatische Stellaggregat eine manuell betätigte Ventileinheit aufweist. Es ist aber auch möglich, dass beide Fahrzeugsitz-Löseeinrichtungen gemeinsam manuell betätigbar sind, beispielsweise über eine gemeinsame manuell betätigte Ventileinheit. Beispielsweise kann die Ventileinheit dann eine Belüftung zwischen den pneumatischen Stellaggregaten der beiden Fahrzeugsitz-Löseeinrichtungen umschalten, so dass das pneumatische Stellaggregat der ersten Fahrzeugsitz-Löseeinrichtung belüftet wird, wenn das pneumatische Stellaggregat der zweiten Fahrzeugsitz-Löseeinrichtung entlüftet wird, und umgekehrt.

Dass zwei Fahrzeugsitz-Löseeinrichtungen zum Einsatz kommen, ist vor allem deswegen vorteilhaft, weil Bowdenzüge sich insbesondere zur Übertragung von Zug, aber weniger zur Übertragung von Druck eignen. Es wurde im Vorgehenden bereits beschrieben, wie entweder mit der Übertragung von Druck durch den Bowdenzug oder durch Rückstellfedern an verschiedenen Positionen im Kraftfluss trotzdem ein Umschalten zwischen Lösestellung und Arretierstellung ermöglicht ist. Mit zwei Fahrzeugsitz-Löseeinrichtung können aber zwei Bowdenzüge eingesetzt werden, die jeweils nur auf Zug wirken müssen und die eine Unterstützung des Rückstellens im Bereich des Arretierelements beispielsweise durch eine Feder nicht zwingend erforderlich machen.

Die beiden Fahrzeugsitz-Löseeinrichtungen können unabhängig voneinander an dem Fahrzeugsitz montiert werden. Dies bedeutet insbesondere, dass die Bowdenzüge nicht parallel laufen müssen und dass die Stellaggregate nicht benachbart angeordnet werden müssen und vorhandener Bauraum an dem Fahrzeugsitz besonders vorteilhaft ausgenutzt werden kann.

Eine weitere Lösung der der Erfindung zugrunde liegenden Aufgabe stellt ein Fahrzeugsitz da man der eine Fahrzeugsitz-Löseeinrichtung aufweist, wie sie im Vorhergehenden beschrieben wurde, oder einer Fahrzeugsitz-Arretierung, wie sie im Vorhergehenden beschrieben wurde. Ein solcher Fahrzeugsitz kann insbesondere für ein Nutzfahrzeug (bspw. ein Agrarfahrzeug, ein Lastkraftwagen, ein Zugfahrzeug, ein Arbeitsfahrzeug oder ein Omnibus) verwendet werden. Es ist möglich, dass ein herkömmlicher Fahrzeugsitz zu dem erfindungsgemäßen Fahrzeugsitz aufgerüstet wird, indem insbesondere ein Stellaggregat, ein Bowdenzug und ein Arretierelement bereitgestellt und in mechanischer Reihenschaltung miteinander verbunden werden, so dass über die Betätigung des Stellaggregats das Arretierelement betätigt wird. Das Arretierelement muss dabei in beschriebener Weise mit einer vorhandenen Arretiervorrichtung des Fahrzeugsitzes gekoppelt werden. Es ist möglich, dass dazu Eingriffe in die Arretiervorrichtung vorgenommen werden müssen, beispielsweise indem diese demontiert und anderer Stelle anmontiert oder in ihrer Form und dem Zusammenwirken ihrer Einzelteile verändert wird. Ein solches Nachrüsten eines vorhandenen Fahrzeugsitzes ist besonders vorteilhaft, weil in dieser Weise bestehende Sicherheitszulassungen für den Fahrzeugsitz nicht beeinträchtigt werden. In seiner Substanz und insbesondere in den sicherheitsrelevanten Bauteilen bleibt der Fahrzeugsitz unverändert. Lediglich die beschriebenen Bauteile müssen nachgerüstet werden, wobei diese entweder in den Fahrzeugsitz eingebaut werden können oder unter Umständen auch außerhalb des Fahrzeugsitzes angebracht werden können.

Vorteilhafte Weiterbildungen der Erfindung ergeben sich aus den Patentansprüchen, der Beschreibung und den Zeichnungen. Die in der Beschreibung genannten Vorteile von Merkmalen und von Kombinationen mehrerer Merkmale sind lediglich beispielhaft und können alternativ oder kumulativ zur Wirkung kommen, ohne dass die Vorteile zwingend von erfindungsgemäßen Ausführungsformen erzielt werden müssen. Ohne dass hierdurch der Gegenstand der beigefügten Patentansprüche verändert wird, gilt hinsichtlich des Offenbarungsgehalts der ursprünglichen Anmeldungsunterlagen und des Patents Folgendes: weitere Merkmale sind den Zeichnungen - insbesondere den dargestellten Geometrien und den relativen Abmessungen mehrerer Bauteile zueinander sowie deren relativer Anordnung und Wirkverbindung - zu entnehmen. Die Kombination von Merkmalen unterschiedlicher Ausführungsformen der Erfindung oder von Merkmalen unterschiedlicher Patentansprüche ist ebenfalls abweichend von den gewählten Rückbeziehungen der Patentansprüche möglich und wird hiermit angeregt. Dies betrifft auch solche Merkmale, die in separaten Zeichnungen dargestellt sind oder bei deren Beschreibung genannt werden. Diese Merkmale können auch mit Merkmalen unterschiedlicher Patentansprüche kombiniert werden. Ebenso können in den Patentansprüchen aufgeführte Merkmale für weitere Ausführungsformen der Erfindung entfallen.

Die in den Patentansprüchen und der Beschreibung genannten Merkmale sind bezüglich ihrer Anzahl so zu verstehen, dass genau diese Anzahl oder eine größere Anzahl als die genannte Anzahl vorhanden ist, ohne dass es einer expliziten Verwendung des Adverbs "mindestens" bedarf. Wenn also beispielsweise von einem Ventil die Rede ist, ist dies so zu verstehen, dass genau ein Ventil, zwei Ventile oder mehr Ventile vorhanden sind. Diese Merkmale können durch andere Merkmale ergänzt werden oder die einzigen Merkmale sein, aus denen das jeweilige Erzeugnis besteht.

Die in den Patentansprüchen enthaltenen Bezugszeichen stellen keine Beschränkung des Umfangs der durch die Patentansprüche geschützten Gegenstände dar. Sie dienen lediglich dem Zweck, die Patentansprüche leichter verständlich zu machen.

### KURZBESCHREIBUNG DER FIGUREN

Im Folgenden wird die Erfindung anhand in den Figuren dargestellter bevorzugter Ausführungsbeispiele weiter erläutert und beschrieben.
- **Fig. 1**: zeigt einen pneumatischen Schaltplan für ein pneumatisches Stellaggregat und eine manuell betätigte Ventileinheit als Teil einer erfindungsgemäßen Fahrzeugsitz-Löseeinrichtung.
- **Fig. 2**: zeigt einen pneumatischen Schaltplan für zwei pneumatische Stellaggregate und eine manuell betätigte Ventileinheit als Teil einer erfindungsgemäßen Fahrzeugsitz-Löseeinrichtung.
- **Fig. 3**: zeigt eine Fahrzeugsitz-Löseeinrichtung.
- **Fig. 4**: zeigt die Fahrzeugsitz-Löseeinrichtung gemäß Fig. 3 in einer Schnittdarstellung, wobei sich das pneumatische Stellaggregat in einem entlüfteten Zustand befindet.
- **Fig. 5**: zeigt einen vergrößerten Ausschnitt der Fahrzeugsitz-Löseeinrichtung gemäß Fig. 3 und 4.
- **Fig. 6**: zeigt die Fahrzeugsitz-Löseeinrichtung gemäß Fig. 3 bis 5 in einer Schnittdarstellung, wobei sich das pneumatische Stellaggregat in einem belüfteten Zustand befindet.
- **Fig. 7**: zeigt einen vergrößerten Ausschnitt der Fahrzeugsitz-Löseeinrichtung gemäß Fig. 3 bis 6.
- **Fig. 8**: zeigt eine Fahrzeugsitzarretierung mit einer Fahrzeugsitz-Löseeinrichtung in einer Seitenansicht.
- **Fig. 9 und 10**: zeigen vergrößerte Ausschnitte der Fahrzeugsitzarretierung und der Fahrzeugsitz-Löseeinrichtung gemäß Fig. 8 in räumlichen Ansichten unter verschiedenen Blickrichtungen.
- **Fig. 11**: zeigt eine Fahrzeugsitzarretierung mit zwei Fahrzeugsitz-Löseeinrichtungen in einer Seitenansicht.
- **Fig. 12, 13 und 14**: zeigen vergrößerte Ausschnitte der Fahrzeugsitzarretierung und der Fahrzeugsitz-Löseeinrichtungen gemäß Fig. 11 in räumlichen Ansichten unter verschiedenen Blickrichtungen.

### FIGURENBESCHREIBUNG

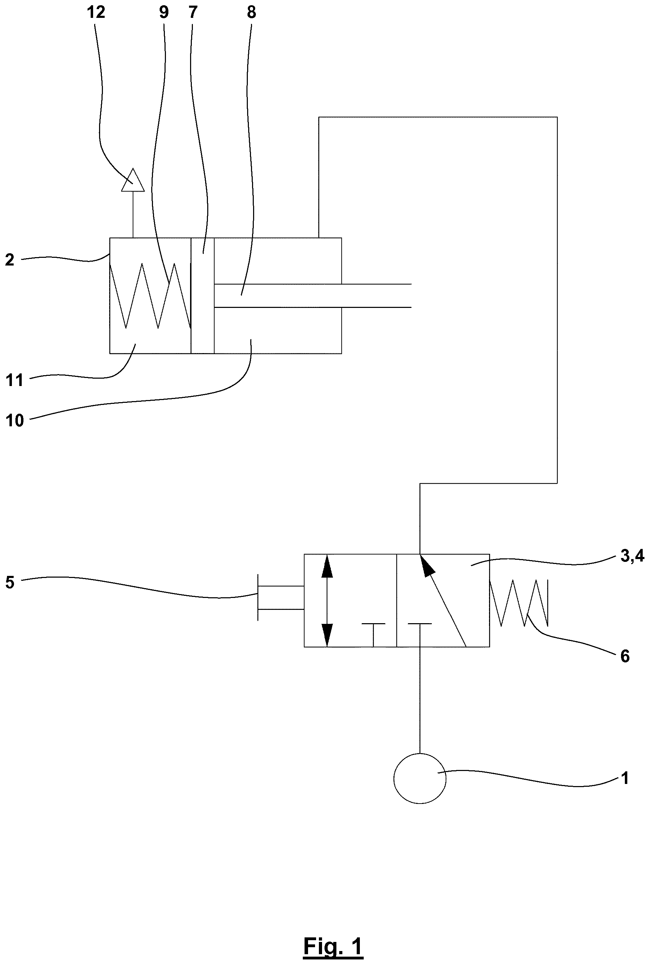

**Fig. 1** zeigt einen pneumatischen Schaltplan mit einer Druckluftversorgung 1, insbesondere einer Pumpe oder einem Vorratsbehälter, einem pneumatischen Stellaggregat 2 und einer Ventileinheit 3 zur Betätigung des pneumatischen Stellaggregats 2 durch Beeinflussung der pneumatischen Beaufschlagung. Die Ventileinheit 3 ist hier ein 3/2-Wege-Ventil 4 mit einem Muskelkraftbetätigungsorgan 5, z. B. einem Druckknopf. Das 3/2-Wege-Ventil 4 ist in einer Entlüftungsstellung gezeigt. Mit dem Muskelkraftbetätigungsorgan 5 kann das 3/2-Wege-Ventil 4 entgegen der Wirkung einer Rückstellfeder 6 in eine Belüftungsstellung gebracht werden, in der das 3/2-WegeVentil 4 die Druckluftversorgung 1 mit dem pneumatischen Stellaggregat 2 verbindet.

Das pneumatische Stellaggregat 2 weist einen Kolben 7 mit einer Kolbenstange 8 auf, der mit einer Rückstellfeder 9, hier einer Druckfeder, belastet ist und eine erste Kammer 10 und eine zweite Kammer 11 begrenzt. Die zweite Kammer 11 ist mit einer Entlüftung 12 verbunden. Die erste Kammer 10 kann über das 3/2-Wege-Ventil 4 be- und entlüftet werden.

Wenn also das 3/2-Wege-Ventil 4 bzw. die Ventileinheit 3 in die Belüftungsstellung gebracht wird, wird die erste Kammer 10 belüftet und der Kolben in Fig. 1 nach links bewegt, so dass das Volumen der zweiten Kammer 11 verringert wird. Wird das 3/2-Wege-Ventil 4 bzw. die Ventileinheit 3 durch Loslassen des Muskelkraftbetätigungsorgans 5 und die Wirkung der Rückstellfeder 6 wieder in die Entlüftungsstellung gebracht, wird die erste Kammer 10 entlüftet und der Kolben 7 bewegt sich aufgrund der Wirkung der Rückstellfeder 9 in Fig. 1 nach rechts, so dass sich das Volumen der zweiten Kammer 11 vergrößert, während sich das Volumen der ersten Kammer 10 verringert.

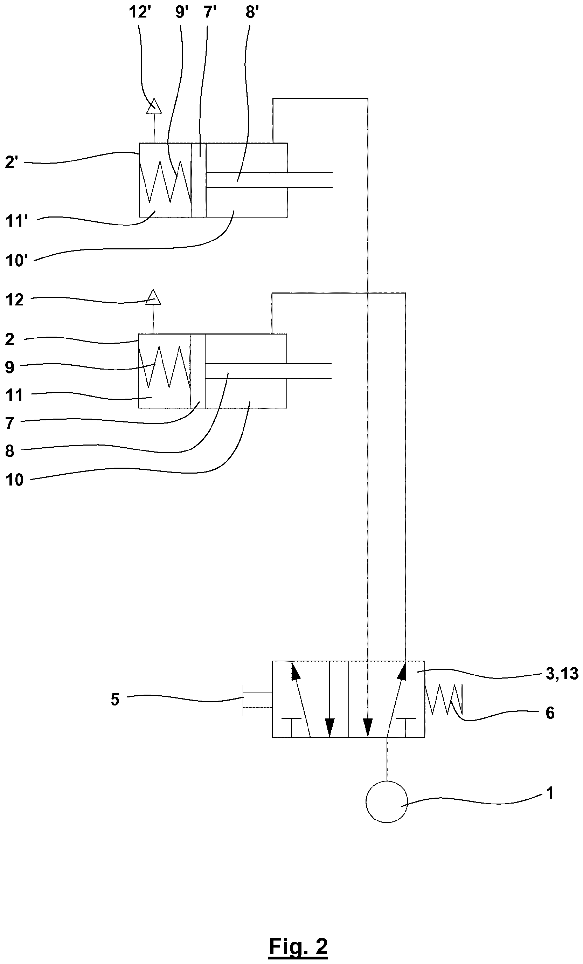

**Fig. 2** zeigt einen weiteren pneumatischen Schaltplan. Gegenüber Fig. 1 weist der Schaltplan ein zweites pneumatisches Stellaggregat 2' auf.

Die Ventileinheit 3 ist gemäß Fig. 2 ein 5/2-Wege-Ventil 13. Dieses erlaubt nicht das Umschalten zwischen einer Entlüftungsstellung und einer Belüftungsstellung, sondern zwischen einer ersten Belüftungsstellung mit einer hiermit verbundenen ersten Entlüftungsstellung und einer zweiten Belüftungsstellung mit einer hiermit verbundenen zweiten Entlüftungsstellung. Fig. 2 zeigt das 5/2-Wege-Ventil 13 in der ersten Belüftungsstellung, in der das erste pneumatische Stellaggregat 2 belüftet ist. Der erste Kolben 7 ist somit nach links beaufschlagt. Das pneumatische Stellaggregat 2' ist hingegen entlüftet, so dass die erste Entlüftungsstellung vorliegt und der zweite Kolben 7' somit durch die Wirkung der Rückstellfeder 9' nach rechts beaufschlagt ist.

Durch Betätigen des Muskelkraftbetätigungsorgans 5 kann das 5/2-Wege-Ventil 13 entgegen der Wirkung der Rückstellfeder 6 in die zweite Belüftungsstellung und die hiermit verbundene zweite Entlüftungsstellung gebracht werden, in der das zweite pneumatische Stellaggregat 2' belüftet wird, während das erste pneumatische Stellaggregat 2 entlüftet wird. Die Beaufschlagung der Kolben 7, 7' kehrt sich somit um. Mittels des 5/2-Wege-Ventils 13 bzw. der Ventileinheit 3 kann somit zwischen Beaufschlagungsrichtungen der Kolben 7, 7' umgeschaltet werden.

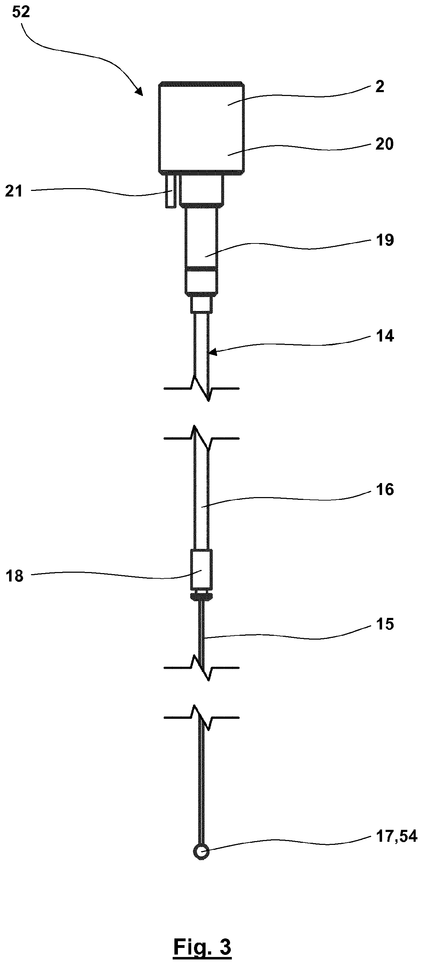

**Fig. 3** zeigt eine Fahrzeugsitz-Löseeinrichtung 52, die ein pneumatisches Stellaggregat 2 mit einem daran gekoppelten Bowdenzug 14 und einem Arretierelement 54 aufweist. Der Bowdenzug 14 weist eine Seele 15 und eine Hülle 16 auf. Die Seele 15 tritt aus der Hülle 16 an einer ersten Endhülse 18 der Hülle 16 hinaus, die so ausgebildet ist, dass sie mindestens zur Abstützung der Hülle 16 an einem weiteren Bauteil montiert werden kann. An ihrem einen, hier freien, Ende weist die Seele 15 ein erstes Koppelelement 17 auf, das hier einen kreisförmigen Querschnitt ausbildet und insbesondere eine Kugel ist. Das Koppelelement 17 kann unmittelbar das Arretierelement 54 bilden.

Die Hülle 16 ist mit dem pneumatischen Stellaggregat 2 im Bereich eines Kolbenstangengehäuses 19 verbunden oder an diesem abgestützt. Das Kolbenstangengehäuse 19 ist ein Teil eines Zylindergehäuses 20 des pneumatischen Stellaggregats 2 und nimmt die Kolbenstange 8 verschieblich auf, wobei das Kolbenstangengehäuse 19 so lang ausgebildet ist, dass die Kolbenstange 8 während eines gesamten Arbeitshubs des Kolbens 7 von dem Kolbenstangengehäuse 19 aufgenommen wird. Das Zylindergehäuse 20 weist außerdem einen Drucklufteingang 21 auf.

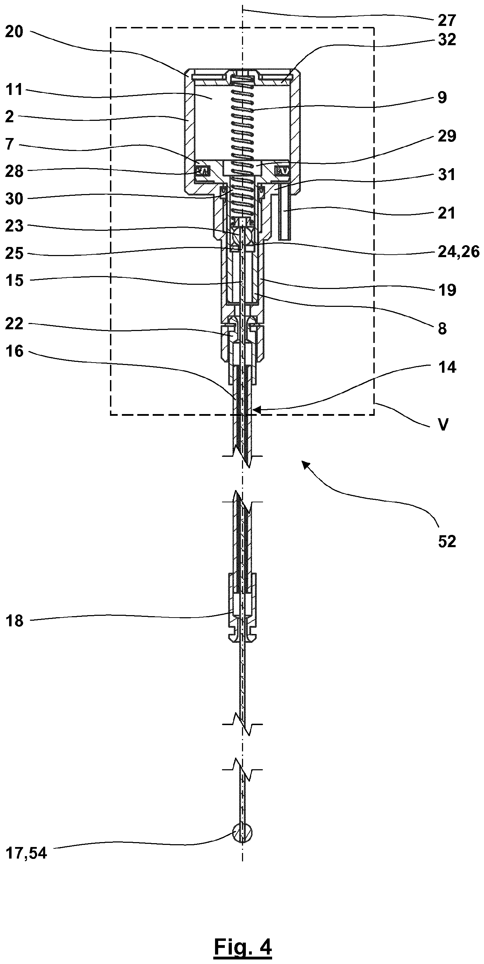

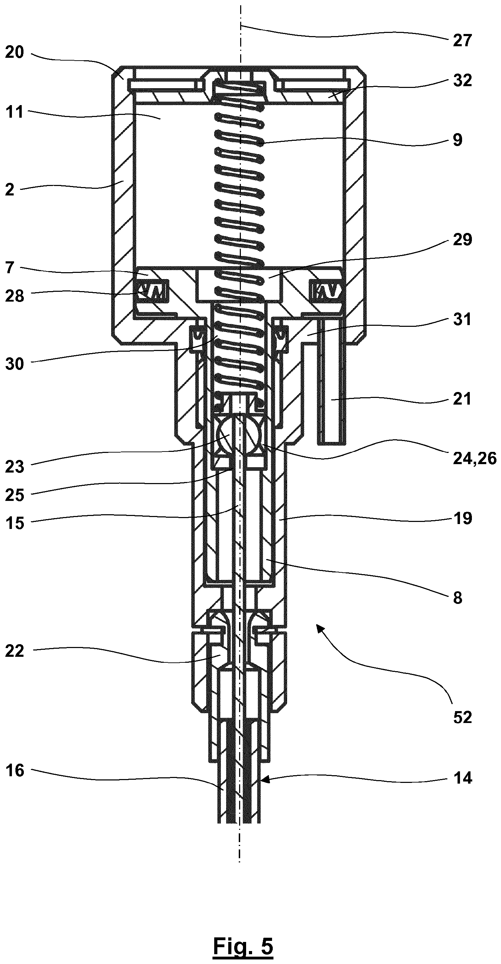

**Fig. 4** zeigt die Fahrzeugsitz-Löseeinrichtung 52 in einem Längsschnitt. **Fig. 5** zeigt einen vergrößerten Ausschnitt aus Fig. 4 im Bereich des Zylindergehäuses.

Der Bowdenzug 14 weist eine zweite Endhülse 22 der Hülle 16 auf, die in dem Kolbenstangengehäuse 19 montiert ist. Die Seele 15 erstreckt sich aus der zweiten Endhülse 22 in das Kolbenstangengehäuse 19 und weist an ihrem Ende ein zweites Koppelelement 23 auf, das ebenfalls mit kreisförmigem Querschnitt, insbesondere als Kugel, ausgebildet ist. Das Koppelelement 23 ist aufgenommen in einer an der Kolbenstange 8 gehaltenen Aufnahme 24. Die Aufnahme 24 weist zu diesem Zweck eine Ausnehmung 25 auf, durch die sich die Seele 15 hindurch erstreckt. Wenn die Ausnehmung 25 im Querschnitt randoffen ist, kann die Seele 15 seitlich in die Aufnahme 24 eingesetzt sein. In diesem Fall kann die Aufnahme 24 eine Sicherung (nicht dargestellt) aufweisen, die verhindert, dass das Koppelelement 23 wieder aus der Aufnahme 24 hinausrutscht. Die Seele 15 kann aber auch durch die Ausnehmung 25 hindurchgefädelt worden sein, bevor das Koppelelement 23 angebracht wurde. In diesem Fall ist keine zusätzliche Sicherung notwendig. Die Aufnahme 24 bildet hier gemeinsam mit dem Koppelelement 23 ein Kugelgelenk 26. Wenn eine Zugkraft unter einem Winkel zu einer Längsachse 27 der Kolbenstange 8 auf die Seele 15 wirkt, wird diese Zugkraft durch das Kugelgelenk 26 und das kugelförmige Koppelelement 23 trotzdem ideal übertragen, sodass keine Belastungsspitzen an der Aufnahme 24, dem Koppelelement 23 und der Seele 15 auftreten.

Die Kolbenstange 8 und der mit Dichtungen 28 gegenüber einer Wand des Zylindergehäuses 20 versehene Kolben 7 weisen aneinander anschließende, zylindrische und hier abgestufte Ausnehmungen 29, 30 auf, durch die sich die Rückstellfeder 9 durch den Kolben 7 in die Kolbenstange 8 erstreckt. Die Rückstellfeder 9 verläuft durch einen Teil der Kolbenstange 8 und ist hier an der Aufnahme 24 abgestützt.

Fig. 4 zeigt das pneumatische Stellaggregat 2 in einem entlüfteten Zustand, in dem die zweite Kammer 11 ihr maximales Volumen und die erste Kammer 10 ihr minimales Volumen hat. Das pneumatische Stellaggregat 2 befindet sich somit in einer ersten Endstellung, in der der Kolben 7 an einer ersten Querwand 31 des Zylindergehäuses 20 anliegt und die Rückstellfeder 9 ihre maximale Erstreckung hat. Die erste Endstellung kann einer ersten Arbeitsstellung oder einer zweiten Arbeitsstellung des Kolbens 7 entsprechen.

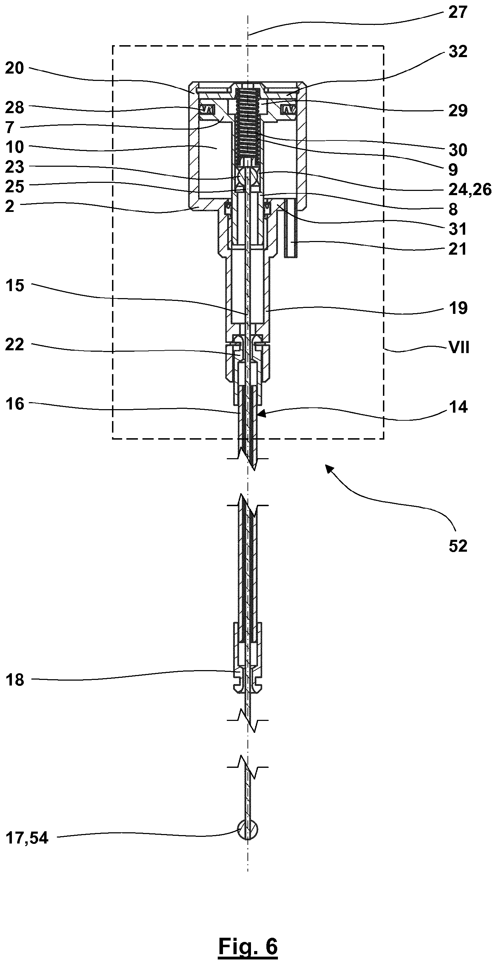

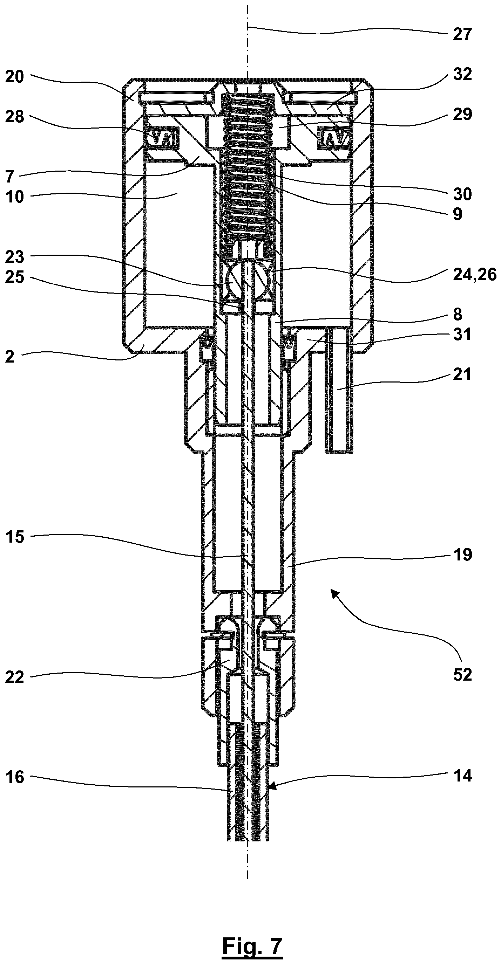

**Fig. 6** und der vergrößerte Ausschnitt in **Fig. 7** zeigen das pneumatische Stellaggregat in einem belüfteten Zustand, in dem die erste Kammer 10 ihre maximales Volumen und die zweite Kammer 11 ihr minimales Volumen hat. Das pneumatische Stellaggregat 2 befindet sich somit in einer zweiten Endstellung, in der der Kolben 7 an einer zweiten Querwand 32 des Zylindergehäuses 20 anliegt und die Rückstellfeder 9 ihre minimale Erstreckung hat. Die zweite Endstellung kann einer zweiten Arbeitsstellung oder einer ersten Arbeitsstellung des Kolbens 7 entsprechen.

Die Rückstellfeder 9 befindet sich in der zweiten Endstellung nahezu vollständig innerhalb der Ausnehmungen 29, 30, sodass der Kolben 7 an der zweiten Querwand 32 zur Anlage kommen kann.

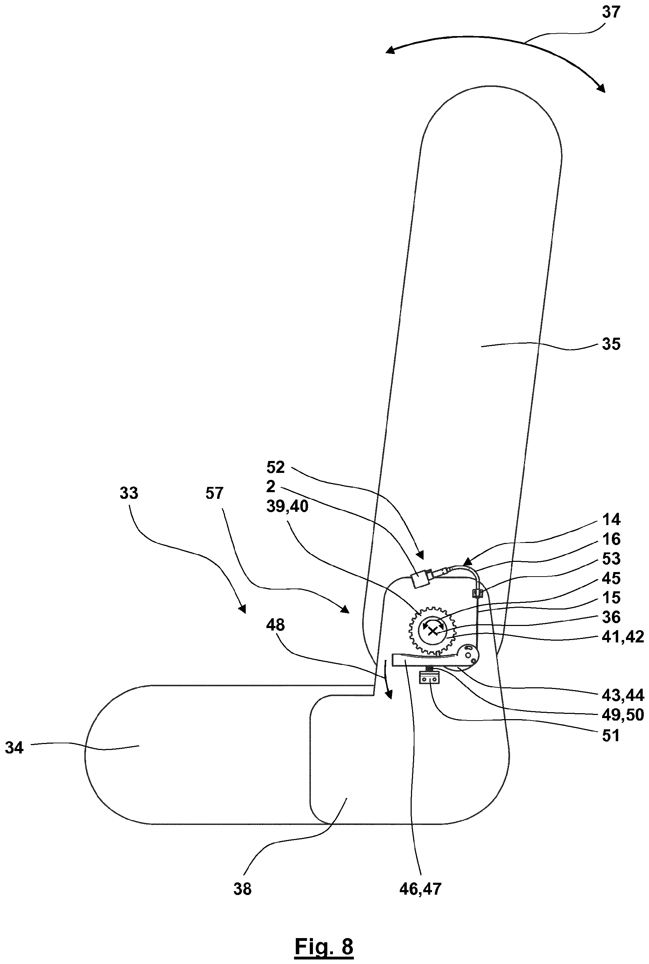

**Fig. 8** zeigt einen Fahrzeugsitz 33 mit einem Sitzteil 34 und einer Rückenlehne 35. Die Rückenlehne 35 ist um eine Schwenkachse 36 gegenüber dem Sitzteil 34 in Schwenkrichtungen 37 verschwenkbar. Dazu sind das Sitzteil 34 und die Rückenlehne 35 mit einem Verbindungsteil 38 oder einer Sitzkonsole verbunden, an dem die Schwenkachse 36 ausgebildet ist.

Der Fahrzeugsitz 33 weist eine Arretiervorrichtung 39 auf, mittels welcher ein Arretieren einer Schwenkstellung der Rückenlehne 35 möglich ist und welche je nach Betätigung der Fahrzeugsitz-Löseeinrichtung 52 arretiert und gelöst werden kann. Die Arretiervorrichtung 39 ist hier als Verriegelungsvorrichtung 40 ausgebildet. Die Arretiervorrichtung 39 weist dazu ein Verriegelungsrad 41 als Verriegelungselement 42 und eine Verriegelungsklinke 43 als Eingriffselement 44 auf. Das Verriegelungselement 42 ist fest mit der Rückenlehne 35 verbunden, sodass, wenn das Verriegelungselement 42 in einer Drehrichtung 45 gedreht wird, die Rückenlehne 35 in eine Schwenkrichtung 37 verschwenkt wird. Das Verriegelungselement 42 und damit die Rückenlehne 35 wird aber am Drehen gehindert, so lange das Eingriffselement 44 in das Verriegelungselement 42 eingreift. Diese Arretierstellung ist in Fig. 8 gezeigt.

Das Eingriffselement 44 kann aus dem Eingriff in das Verriegelungselement 42 gelöst werden, indem eine Handbetätigungsvorrichtung 46 betätigt wird, hier indem ein mit dem Eingriffselement 44 drehfest verbundener Handhebel 47 in eine Schwenkrichtung 48 bewegt wird. Wenn der Handhebel 47 also in die Schwenkrichtung 48 bewegt wird, wird die Arretiervorrichtung 39 in ihre Lösestellung gebracht und die Rückenlehne 35 ist verschwenkbar.

Durch die Bewegung des Handhebels 47 wird eine Rückstellfeder 49, hier eine Druckfeder 50, gegen ein erstes Abstützelement 51 beaufschlagt, das ortsfest an dem Verbindungsteil 38 montiert ist. Wird der Handhebel 47 somit losgelassen, wird er durch die Rückstellfeder 49 entgegen der Schwenkrichtung 48 bewegt, sodass er in seine Ausgangsposition zurückgelangt und das Eingriffselement 44 wieder in Eingriff in das Verriegelungselement 42 gebracht wird, sodass die Arretierstellung wieder eingenommen wird.

Alternativ kann das Eingriffselement 44 aber auch aus dem Eingriff in das Verriegelungselement 42 gelöst werden, indem die Fahrzeugsitz-Löseeinrichtung 52 betätigt wird. Mit der Fahrzeugsitz-Löseeinrichtung 52 und der Arretiervorrichtung 39 ist eine Fahrzeugsitzarretierung 57 gebildet. Die Fahrzeugsitz-Löseeinrichtung 52 weist das Stellaggregat 2 und den Bowdenzug 14 auf, wobei der Bowdenzug 14 an seiner ersten Endhülse 18 der Hülle 16 an einem zweiten Abstützelement 53 abgestützt ist.

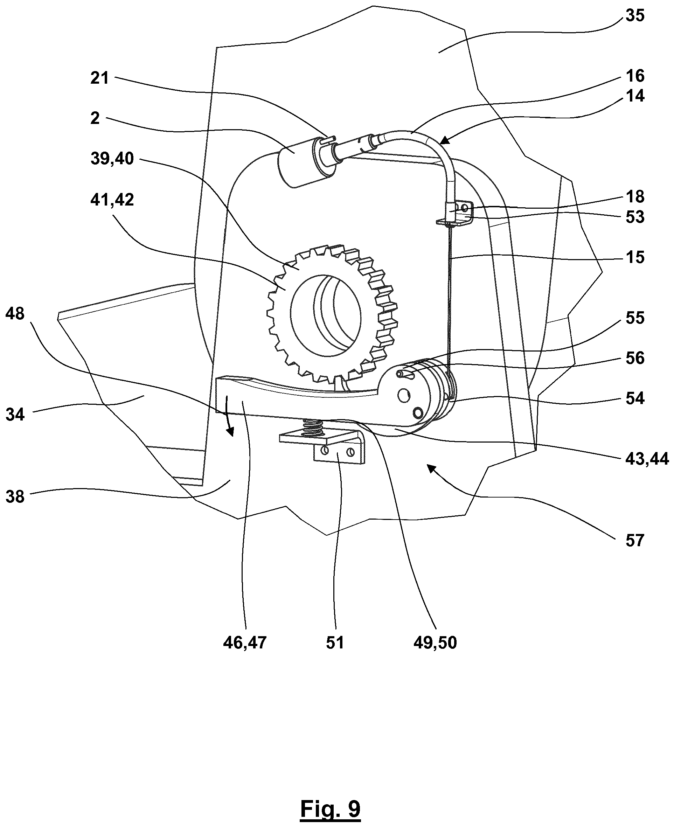

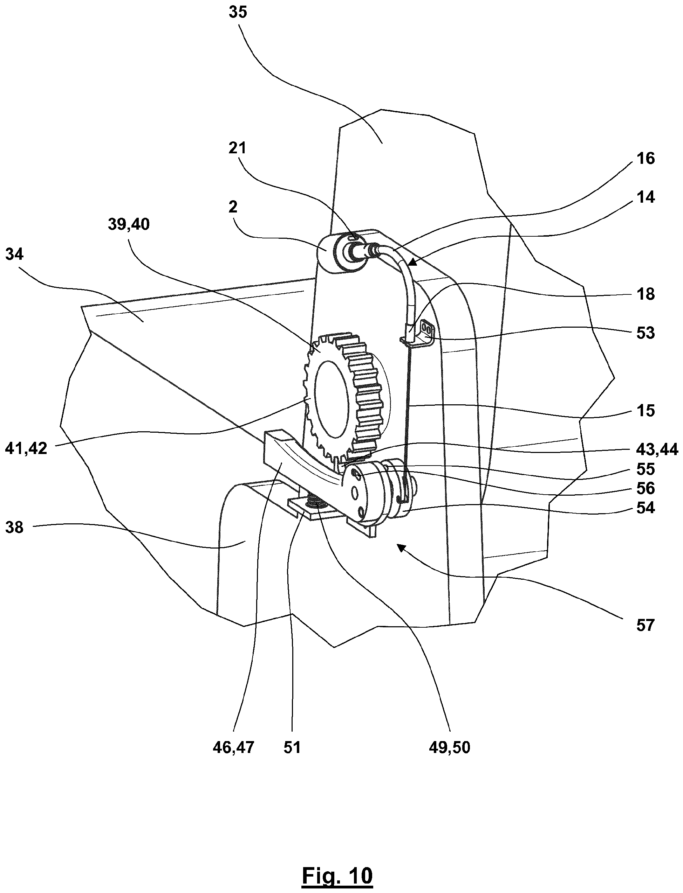

**Fig. 9** und **Fig. 10** zeigen die Fahrzeugsitzarretierung 57 mit der Fahrzeugsitz-Löseeinrichtung 52 in vergrößerten Ansichten. Das Stellaggregat 2 weist zwar den Druckluftanschluss 21 auf, aus Gründen der Übersichtlichkeit sind aber weitere pneumatische Bauelemente nicht dargestellt. Insbesondere kann an den Druckluftanschluss 21 die Ventileinheit 3 pneumatisch angeschlossen sein, sodass über die Ventileinheit 3 das Stellaggregat 2 betätigt werden kann. Dazu kann beispielsweise eine pneumatische Schaltung wie in Fig. 1 dargestellt gebildet sein.

Die Fahrzeugsitz-Löseeinrichtung 52 weist das Arretierelement 54 auf. Das Arretierelement 54 ist mechanisch so mit der Arretiervorrichtung 39 verbunden, dass die Arretiervorrichtung 39 betätigt wird, wenn das Arretierelement 54 betätigt wird. Dazu ist das Arretierelement 54 mechanisch mit dem Eingriffselement 44 gekoppelt. Wenn also das Eingriffselement 44 aus dem Eingriff in das Verriegelungselement 42 gelöst werden soll und so die Arretiervorrichtung 39 in ihre Lösestellung gebracht werden soll, muss auch das Arretierelement 54 in seine Lösestellung gebracht werden. In Fig. 9 und 10 ist das Arretierelement 54 in seiner Arretierstellung gezeigt, sodass sich auch die Arretiervorrichtung 39 in ihrer Arretierstellung befindet.

Mit der Bewegung des Kolbens 7 in dem Stellaggregat 2 wird die daran befestigte Seele 15 des Bowdenzugs 14 bewegt. Da die Hülle 16 des Bowdenzugs 14 zum einen an dem Zylindergehäuse 20 und zum anderen an dem zweiten Abstützelement 53 abgestützt ist, bewirkt ein Bewegen des Kolbens 8 in die zweite Endstellung eine Zugkraft an der Seele 15 des Bowdenzugs 14. Die Seele 15 ist mechanisch mit dem Arretierelement 54 gekoppelt, sodass das Arretierelement 54 durch die Zugkraft an der Seele 15 in seine Lösestellung gebracht wird. Die zweite Endstellung des Kolbens 7 gemäß Fig. 6 und 7 entspricht hier somit der zweiten Arbeitsstellung, in der sich das Arretierelement 54 in seiner Lösestellung befindet. Demgegenüber entspricht die (in Fig. 8 bis 10 nicht gezeigte) erste Endstellung des Kolbens 7 gemäß Fig. 4 und 5 der ersten Arbeitsstellung, in der sich das Arretierelement 54 in seiner Arretierstellung befindet.

Das Arretierelement 54 und das Eingriffselement 44 sind nicht über den gesamten Bewegungsfreiheitsgrad oder Hub des Eingriffselements 44 antriebsfest miteinander verbunden. Vielmehr sind diese über ein Spiel miteinander verbunden. Für die hier dargestellte konstruktive Ausgestaltung sind das Arretierelement 54 und das Eingriffselement 44 über einen Verbindungsbolzen 55 an dem Arretierelement 54 gekoppelt, der in ein Langloch 56 an dem Eingriffselement 44 und dem fest mit diesem verbundenen Handhebel 47 eingreift. In dieser Weise ist die Betätigung des Handhebels 47 von der Betätigung des Arretierelements 54 abgekoppelt. Wenn der Handhebel 47 in die Schwenkrichtung 48 betätigt wird, gleitet der Verbindungsbolzen 55 durch das Langloch 56, das so bemessen ist, dass der Verbindungsbolzen 55 sich während des gesamten Hubs des Handhebels 47 in dem Langloch 56 frei bewegen kann. Das Betätigen des Handhebels 47 ist daher möglich, ohne Kräfte auf das Arretierelement 54 und damit auf den Bowdenzug 14 und das Stellaggregat 2 auszuüben und ohne dass Arretierelement 54 zu bewegen. Wenn hingegen das Arretierelement 54 betätigt wird, kann der Verbindungsbolzen an einer Begrenzung des Langlochs 56 angreifen und die Bewegung des Arretierelements 54 auf das Eingriffselement 44 übertragen.

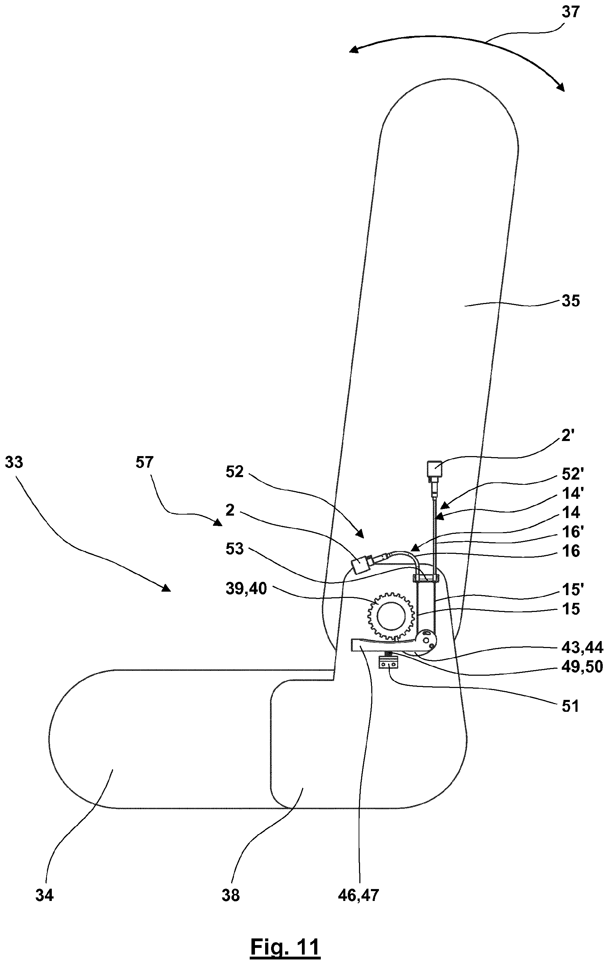

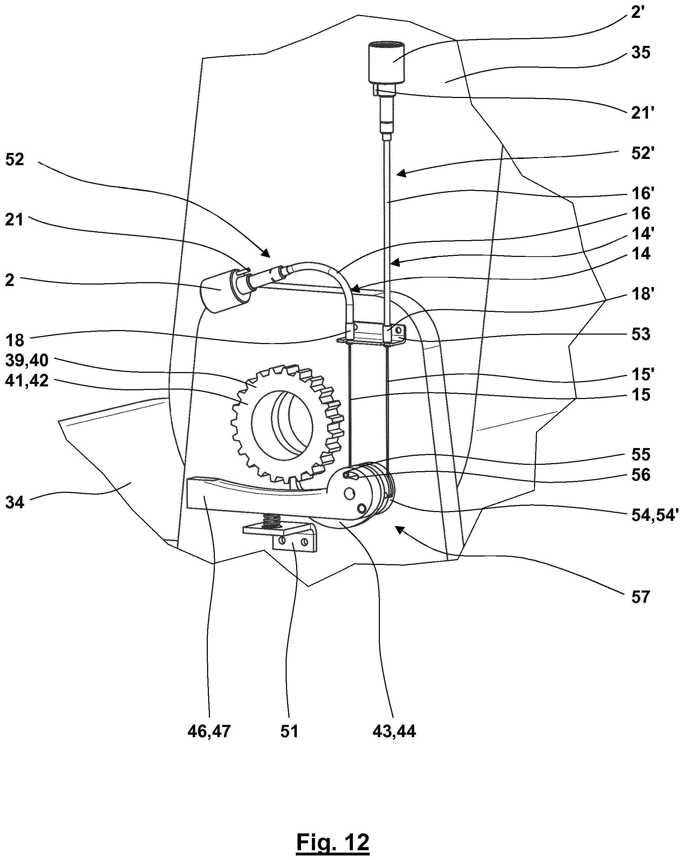

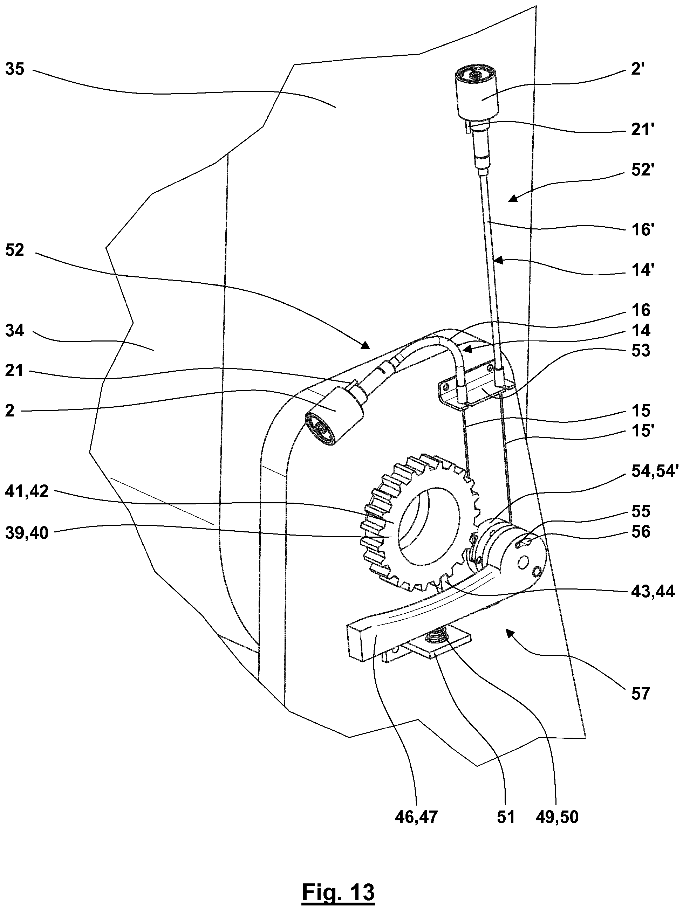

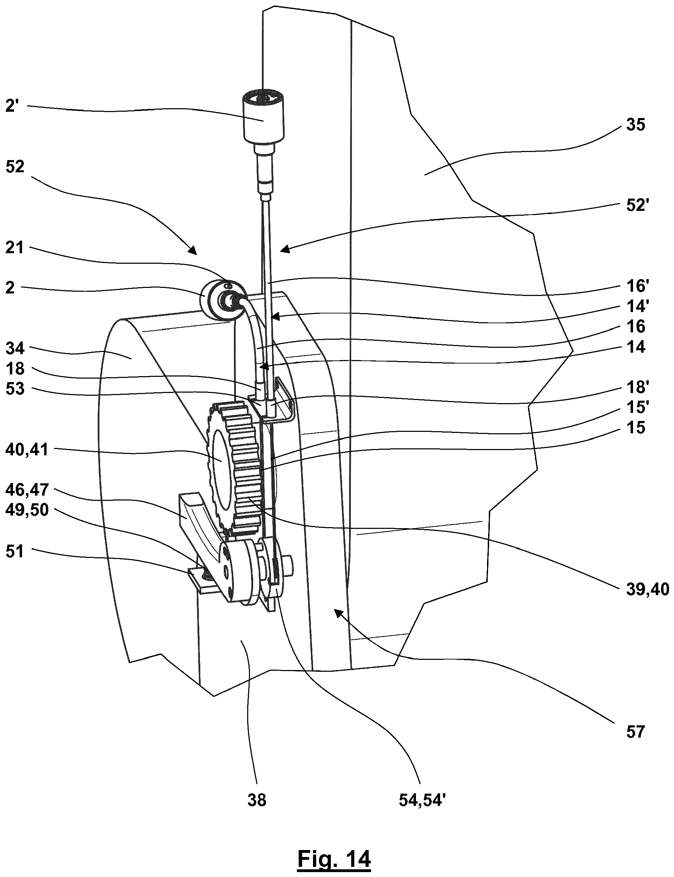

**Fig. 11** zeigt den Fahrzeugsitz 33 mit der Fahrzeugsitzarretierung 57 und deren Arretiervorrichtung 39 und Fahrzeugsitz-Löseeinrichtung 52. Zusätzlich weist die Fahrzeugsitz-arretierung 57 noch eine zweite Fahrzeugsitz-Löseeinrichtung 52' auf. Die zweite Fahrzeugsitz-Löseeinrichtung 52' ist grundsätzlich der ersten Fahrzeugsitz-Löseeinrichtung 52 entsprechend aufgebaut. Die zweite Fahrzeugsitz-Löseeinrichtung 52' weist ebenfalls ein Stellaggregat 2' und einen Bowdenzug 14' auf. Das Arretierelement 54' der zweiten Fahrzeugsitz-Löseeinrichtung 52' und das Arretierelement 54 der ersten Fahrzeugsitz-Löseeinrichtung 52 sind mit einem gemeinsamen Kopplungskörper gebildet, an dem die jeweiligen Koppelelemente 17 der Fahrzeugsitz-Löseeinrichtungen 52, 52' angelenkt sind. Vorzugsweise handelt es sich bei dem gemeinsamen Kopplungskörper eine Scheibe. Beide Fahrzeugsitz-Löseeinrichtungen 52, 52' greifen somit an demselben Kopplungskörper an. Ihre Wirkungen sind aber genau entgegengesetzt: Wie in den vergrößerten Ansichten der **Fig. 12**, **13** und **14** zu erkennen ist, greifen die Seelen 15, 15' in entgegengesetzte Richtungen an dem Kopplungskörper an. Das heißt, wenn der erste Bowdenzug 14 der ersten Fahrzeugsitz-Löseeinrichtung 52 eine Zugkraft auf den Kopplungskörper des Arretierelements 54, 54' ausübt, wird wie zuvor beschrieben das Arretierelement 54, 54' in die Lösestellung gebracht. Wenn aber der zweite Bowdenzug 14' der zweiten Fahrzeugsitz-Löseeinrichtung 52' ein Zugkraft auf den Kopplungskörper des Arretierelements 54, 54' ausübt, wird das Arretierelement 54, 54' aus der Lösestellung in die Arretierstellung gebracht. Die zweite Fahrzeugsitz-Löseeinrichtung 52' dient also der erleichterten Rückstellung in die Arretierstellung.

Das bedeutet, dass für die zweite Fahrzeugsitz-Löseeinrichtung 52' die erste Endstellung des Kolbens 7 gemäß Fig. 4 und 5 der zweiten Arbeitsstellung entspricht, in der sich das Arretierelement 54 in seiner Lösestellung befindet. Demgegenüber entspricht die (in Fig. 11 bis 14 nicht gezeigte) zweite Endstellung des Kolbens 7 gemäß Fig. 6 und 7 der ersten Arbeitsstellung, in der sich das Arretierelement 54 in seiner Arretierstellung befindet.

Ein Betätigen der Fahrzeugsitz-Löseeinrichtungen 52, 52' kann beispielsweise mit einer pneumatischen Schaltung gemäß Fig. 2 erfolgen, sodass durch Betätigen (bzw. Loslassen) desselben Muskelkraftbetätigungsorgans 5 beide Fahrzeugsitz-Löseeinrichtungen 52, 52' gleichzeitig von der Arretierstellung in die Lösestellung umgeschaltet werden können und umgekehrt.

### BEZUGSZEICHENLISTE

- 1: Druckluftversorgung
- 2, 2': Stellaggregat
- 3: Ventileinheit
- 4: 3/2-Wege-Ventil
- 5: Muskelkraftbetätigungsorgan
- 6: Rückstellfeder
- 7, 7': Kolben
- 8, 8': Kolbenstange
- 9, 9': Rückstellfeder
- 10, 10': Kammer
- 11, 11': Kammer
- 12, 12': Entlüftung
- 13: 5/2-Wege-Ventil
- 14, 14': Bowdenzug
- 15, 15': Seele
- 16, 16': Hülle
- 17: Koppelelement
- 18, 18': Endhülse
- 19: Kolbenstangengehäuse
- 20: Zylindergehäuse
- 21: Drucklufteingang
- 22: Endhülse
- 23: Koppelelement
- 24: Aufnahme
- 25: Ausnehmung
- 26: Kugelgelenk
- 27: Längsachse
- 28: Dichtung
- 29: Ausnehmung
- 30: Ausnehmung
- 31: Querwand
- 32: Querwand
- 33: Fahrzeugsitz
- 34: Sitzteil
- 35: Rückenlehne
- 36: Schwenkachse
- 37: Schwenkrichtung
- 38: Verbindungsteil
- 39: Arretiervorrichtung
- 40: Verriegelungsvorrichtung
- 41: Verriegelungsrad
- 42: Verriegelungselement
- 43: Verriegelungsklinke
- 44: Eingriffselement
- 45: Drehrichtung
- 46: Handbetätigungsvorrichtung
- 47: Handhebel
- 48: Schwenkrichtung
- 49: Rückstellfeder
- 50: Druckfeder
- 51: Abstützelement
- 52, 52': Fahrzeugsitz-Löseeinrichtung
- 53: Abstützelement
- 54, 54': Arretierelement
- 55: Verbindungsbolzen
- 56: Langloch
- 57: Fahrzeugsitzarretierung

## Patentansprüche

1. Fahrzeugsitz-Löseeinrichtung (52) mit einem elektrischen oder pneumatischen Stellaggregat (2), einem Bowdenzug (14) und einem Arretierelement (54), die in mechanischer Reihenschaltung miteinander verbunden sind, sodass durch eine Betätigung des Stellaggregats (2) das Arretierelement (54) von einer Arretierstellung, in welcher keine Verstellung des Fahrzeugsitzes (33) möglich ist, in eine Lösestellung, in welcher eine Verstellung des Fahrzeugsitzes (33) möglich ist, und/oder von der Lösestellung in die Arretierstellung bringbar ist.

2. Fahrzeugsitz-Löseeinrichtung (52) nach Anspruch 1, **dadurch gekennzeichnet, dass** das Stellaggregat (2) ein pneumatisches Stellaggregat (2) ist und das pneumatische Stellaggregat (2) über eine manuell betätigte Ventileinheit (3) betätigbar ist.

3. Fahrzeugsitz-Löseeinrichtung (52) nach Anspruch 1 oder 2, **dadurch gekennzeichnet, dass**
a) der Bowdenzug (14) eine Seele (15) und eine Hülle (16) aufweist,
b) das Arretierelement (54) mechanisch mit einem ersten Endbereich der Seele (15) gekoppelt ist,
c) das Stellaggregat (2) einen pneumatisch beaufschlagten Kolben (7) und ein Zylindergehäuse (20) aufweist, wobei der Kolben (7) je nach pneumatischer Beaufschlagung in dem Zylindergehäuse (20) in eine erste Arbeitsstellung und in eine zweite Arbeitsstellung bringbar ist,
d) die Seele (15) des Bowdenzugs (14) in einem zweiten Endbereich mechanisch mit dem Kolben (7) gekoppelt ist, sodass je nach pneumatischer Beaufschlagung des Stellaggregats (2) infolge einer Bewegung des Kolbens (7) aus der ersten Arbeitsstellung in die zweite Arbeitsstellung das Arretierelement (54) in die Lösestellung bringbar ist.

4. Fahrzeugsitz-Löseeinrichtung (52) nach Anspruch 3, **dadurch gekennzeichnet, dass**
a) die Seele (15) des Bowdenzugs (14) in dem mit dem Kolben (7) gekoppelten zweiten Endbereich ein Koppelelement (23) aufweist und
b) der Kolben (7) eine Kolbenstange (8) aufweist, die über eine Aufnahme (24) verfügt, in der das Koppelelement (23) so aufgenommen ist, dass das Koppelelement (23) zumindest bei auf die Seele (15) wirkenden Zugkräften in Längsrichtung der Kolbenstange (8) an der Aufnahme (24) abgestützt ist.

5. Fahrzeugsitz-Löseeinrichtung (52) nach Anspruch 4, **dadurch gekennzeichnet, dass** die Aufnahme (24) ein Kugelgelenk (26) bildet.

6. Fahrzeugsitz-Löseeinrichtung (52) nach einem der Ansprüche 3 bis 5, **dadurch gekennzeichnet, dass** das pneumatische Stellaggregat (2) eine Rückstellfeder (6) aufweist, mit der eine Rückstellung des Kolbens (7) aus der zweiten Arbeitsstellung in die erste Arbeitsstellung zumindest unterstützt wird.

7. Fahrzeugsitz-Löseeinrichtung (52) nach Anspruch 6, **dadurch gekennzeichnet, dass** die Rückstellfeder (6) zumindest teilweise in einer Ausnehmung (29, 30) der oder einer Kolbenstange (8) und/oder des Kolbens (7) angeordnet ist.

8. Fahrzeugsitz-Löseeinrichtung (52) nach einem der Ansprüche 2 bis 7, **dadurch gekennzeichnet, dass** die Ventileinheit (3) ein 3/2-Wege-Ventil (4) ist oder aufweist.

9. Fahrzeugsitz-Löseeinrichtung (52) nach einem der Ansprüche 2 bis 8, **dadurch gekennzeichnet, dass** die Ventileinheit (3) und das pneumatische Stellaggregat (2) pneumatisch so gekoppelt sind und die Seele (15) des Bowdenzugs (14) und das Arretierelement (54) mechanisch so gekoppelt sind, dass bei einer Betätigung der Ventileinheit (3) das Arretierelement (54) in die Lösestellung gebracht wird und bei einem Beenden der Betätigung der Ventileinheit das Arretierelement (54) in die Arretierstellung gebracht wird.

10. Fahrzeugsitzarretierung (57) mit einer Arretiervorrichtung (39) und einer Fahrzeugsitz-Löseeinrichtung (52) nach einem der vorhergehenden Ansprüche, wobei die Arretiervorrichtung (39) mit dem Arretierelement (54) der Fahrzeugsitz-Löseeinrichtung (52) gekoppelt ist und über dieses lösbar ist, die Arretiervorrichtung (39) ein mit einem verstellbaren Teil des Fahrzeugsitzes (33) fest verbundenes Verriegelungselement (42) und ein in das Verriegelungselement (42) eingreifendes Eingriffselement (44) aufweist und das Arretierelement (54) der Fahrzeugsitz-Löseeinrichtung (52) mit dem Eingriffselement (44) gekoppelt ist.

11. Fahrzeugsitzarretierung (57) nach Anspruch 10, **dadurch gekennzeichnet, dass** zusätzlich zu der Fahrzeugsitz-Löseeinrichtung (52) eine Handbetätigungsvorrichtung (46) vorhanden ist, mit der die Arretiervorrichtung (39) manuell mechanisch betätigt werden kann, sodass die Arretiervorrichtung (39) wahlweise
a) über die Handbetätigungsvorrichtung (46) oder
b) die Fahrzeugsitz-Löseeinrichtung (52)
betätigt werden kann.

12. Fahrzeugsitzarretierung (57) nach Anspruch 11, **dadurch gekennzeichnet, dass** die Handbetätigungsvorrichtung (46) einen Handhebel (47) aufweist, der mit dem Eingriffselement (44) gekoppelt ist.

13. Fahrzeugsitzarretierung (57) nach einem der Ansprüche 10 bis 12, **dadurch gekennzeichnet, dass** die Arretiervorrichtung (39) über einen Hub der Handbetätigungsvorrichtung (46) von der Fahrzeugsitz-Löseeinrichtung (52) entkoppelt ist.

14. Fahrzeugsitzarretierung (57), insbesondere Fahrzeugsitzarretierung (57) nach einem der Ansprüche 10 bis 13, **dadurch gekennzeichnet, dass**
a) eine erste Fahrzeugsitz-Löseeinrichtung (52) nach einem der Ansprüche 1 bis 9 vorhanden ist, mit der das Arretierelement (54, 54') in die Lösestellung bringbar ist, und
b) eine zweite Fahrzeugsitz-Löseeinrichtung (52') nach einem der Ansprüche 1 bis 9 vorhanden ist, mit der das Arretierelement (54, 54') in die Arretierstellung bringbar ist.

15. Fahrzeugsitz (33) mit einer Fahrzeugsitz-Löseeinrichtung (52) nach einem der Ansprüche 1 bis 9 oder einer Fahrzeugsitzarretierung (57) nach einem der Ansprüche 10 bis 14.

## Claims

1. Vehicle seat unlocking device (52) with an electric or pneumatic actuating aggregate (2), a Bowden cable (14) and a locking element (54) connected to one another in mechanical series connection so that by actuation of the actuating aggregate (2) it is possible to bring the locking element (54) from a locking position, in which no adjustment of the vehicle seat (33) is possible, into an unlocking position, in which an adjustment of the vehicle seat (33) is possible, and/or from the unlocking position into the locking position.

2. Vehicle seat unlocking device (52) according to claim 1, **characterised in that** the actuating aggregate (2) is a pneumatic actuating aggregate (2) and the pneumatic actuating aggregate (2) is actuatable via a manually actuated valve unit (3).

3. Vehicle seat unlocking device (52) according to claim 1 or 2, **characterised in that**
a) the Bowden cable (14) comprises a cable (15) and a sleeve (16),
b) the locking element (54) is mechanically coupled to a first end portion of the cable (15),
c) the actuating aggregate (2) comprises a pneumatically biased piston (7) and a cylinder housing (20), where in the cylinder housing (20) depending on a pneumatic bias the piston (7) can be brought into a first working position and into a second working position,
d) the cable (15) of the Bowden cable (14) in a second end portion is mechanically coupled to the piston (7), so that depending on the pneumatic bias of the actuating aggregate (2) due to a movement of the piston (7) from the first working position into the second working position the locking element (54) can be brought into the unlocking position.

4. Vehicle seat unlocking device (52) according to claim 3, **characterised in that**
a) the cable (15) of the Bowden cable (14) in the second end portion coupled to the piston (7) comprises a coupling element (23) and
b) the piston (7) comprises a piston rod (8) comprising a receptacle (24) in which the coupling element (23) is accommodated in such a way that the coupling element (23) is supported at the receptacle (24) at least when pulling forces in the longitudinal direction of the piston rod (8) are applied onto the cable (15).

5. Vehicle seat unlocking device (52) according to claim 4, **characterised in that** the receptacle (24) forms a ball joint (26).

6. Vehicle seat unlocking device (52) according to one of claims 3 to 5, **characterised in that** the pneumatic actuating aggregate (2) comprises a return spring (6) by which a return of the piston (7) from the second working position into the first working position is at least supported.

7. Vehicle seat unlocking device (52) according to claim 6, **characterised in that** the return spring (6) is at least partially arranged in a recess (29, 30) of the or a piston rod (8) and/or the piston (7).

8. Vehicle seat unlocking device (52) according to one of claims 2 to 7, **characterised in that** the valve unit (3) is or comprises a 3/2-way valve (4).

9. Vehicle seat unlocking device (52) according to one of claims 2 to 8, **characterised in that** the valve unit (3) and the pneumatic actuating aggregate (2) are pneumatically coupled in such a way and the cable (15) of the Bowden cable (14) and the locking element (54) are mechanically coupled in such a way that when the valve unit (3) is actuated the locking element (54) is brought into the unlocking position and when the actuation of the valve unit terminates the locking element (54) is brought into the locking position.

10. Vehicle seat locking system (57) with a locking device (39) and a vehicle seat unlocking device (52) according to one of the preceding claims, where the locking device (39) is coupled to the locking element (54) of the vehicle seat unlocking device (52) and is releasable via the locking element (54) of the vehicle seat unlocking device (52), the locking device (39) comprises a latching element (42) rigidly connected to an adjustable part of the vehicle seat (33) and an engaging element (44) engaging into the latching element (42) and the locking element (54) of the vehicle seat unlocking device (52) is coupled to the engaging element (44).

11. Vehicle seat locking system (57) according to claim 10, **characterised in that** in addition to the vehicle seat unlocking device (52) a manual actuation device (46) is present with which the locking device (39) can be manually actuated so that the locking device (39) can be actuated selectively
a) via the manual actuation device (46) or
b) the vehicle seat unlocking device (52).

12. Vehicle seat locking system (57) according to claim 11, **characterised in that** the manual actuation device (46) comprises a hand lever (47) coupled to the engaging element (44).

13. Vehicle seat locking system (57) according to one of claims 10 to 12, **characterised in that** the locking device (39) is decoupled from the vehicle seat unlocking device (52) over a stroke of the manual actuation device (46).

14. Vehicle seat locking system (57), especially vehicle seat locking system (57) according to one of claims 10 to 13, **characterised in that**
a) a first vehicle seat unlocking device (52) according to one of claims 1 to 9 is present, with which the locking element (54, 54') can be brought into the unlocking position, and
b) a second vehicle seat unlocking device (52, 52') according to one of claims 1 to 9 is present, with which the locking element (54, 54') can be brought into the locking position.

15. Vehicle seat (33) with a vehicle seat unlocking device (52) according to one of claims 1 to 9 or a vehicle seat locking system (57) according to one of claims 10 to 14.

## Revendications

1. Dispositif de détachement de siège de véhicule (52) avec un module de réglage (2) électrique ou pneumatique, un câble Bowden (14) et un élément de butée (54) qui sont raccordés les uns autres dans un couplage mécanique en série de telle sorte que, par un actionnement du module de réglage (2), l'élément de butée (54) peut être conduit d'une position de butée dans laquelle aucun déplacement du siège de véhicule (33) n'est possible vers une position de détachement dans laquelle un déplacement du siège de véhicule (33) est possible, et/ou de la position de détachement vers la position de butée.

2. Dispositif de détachement de siège de véhicule (52) selon la revendication 1, **caractérisé en ce que** le module de réglage (2) est un module de réglage (2) pneumatique, et le module de réglage (2) pneumatique est actionnable par le biais d'une unité de soupape (3) actionnée manuellement.

3. Dispositif de détachement de siège de véhicule (52) selon la revendication 1 ou 2, **caractérisé en ce que**
a) le câble Bowden (14) présente une âme (15) et une gaine (16),
b) l'élément de butée (54) est couplé mécaniquement à une première zone d'extrémité de l'âme (15),
c) le module de réglage (2) présente un piston (7) sollicité pneumatiquement et un carter de cylindre (20), le piston (7) pouvant être conduit dans une première position de travail et dans une deuxième position de travail selon la sollicitation pneumatique dans le carter de cylindre (20),
d) l'âme (15) du câble Bowden (14) est couplée mécaniquement au piston (7) dans une deuxième zone d'extrémité de telle sorte que, selon la sollicitation pneumatique du module de réglage (2) à la suite d'un mouvement du piston (7) à partir de la première position de travail vers la deuxième position de travail, l'élément de butée (54) peut être conduit dans la position de détachement.

4. Dispositif de détachement de siège de véhicule (52) selon la revendication 3, **caractérisé en ce que**
a) l'âme (15) du câble Bowden (14) présente un élément de couplage (23) dans la deuxième zone d'extrémité couplée au piston (7), et
b) le piston (7) présente une tige de piston (8) qui dispose d'un logement (24) dans lequel l'élément de couplage (23) est logé de telle sorte que l'élément de couplage (23), au moins en présence de forces de traction agissant sur l'âme (15) dans la direction longitudinale de la tige de piston (8), est supporté sur le logement (24).

5. Dispositif de détachement de siège de véhicule (52) selon la revendication 4, **caractérisé en ce que** le logement (24) forme un joint à rotule (26).

6. Dispositif de détachement de siège de véhicule (52) selon l'une des revendications 3 à 5, **caractérisé en ce que** le module de réglage (2) pneumatique présente un ressort de rappel (6) avec lequel un rappel du piston (7) à partir de la deuxième position de travail vers le première position de travail est au moins assisté.

7. Dispositif de détachement de siège de véhicule (52) selon la revendication 6, **caractérisé en ce que** le ressort de rappel (6) est disposé au moins partiellement dans un creux (29, 30) de la ou d'une tige de piston (8) et/ou du piston (7).

8. Dispositif de détachement de siège de véhicule (52) selon l'une des revendications 2 à 7, **caractérisé en ce que** l'unité de soupape (3) est ou présente une vanne 3/2 voies (4) .

9. Dispositif de détachement de siège de véhicule (52) selon l'une des revendications 2 à 8, **caractérisé en ce que** l'unité de soupape (3) et le module de réglage (2) pneumatique sont couplés pneumatiquement de telle sorte, et l'âme (15) du câble Bowden (14) et l'élément de butée (54) sont couplés pneumatiquement de telle sorte que, lors d'un actionnement de l'unité de soupape (3), l'élément de butée (54) est conduit dans la position de détachement et, lors d'une fin de l'actionnement de l'unité de soupape, l'élément de butée (54) est conduit dans la position de butée.

10. Dispositif de butée de siège de véhicule (57) avec un système de butée (39) et un dispositif de détachement de siège de véhicule (52) selon l'une des revendications précédentes, le système de butée (39) étant couplé à l'élément de butée (54) du dispositif de détachement de siège de véhicule (52) et pouvant être détaché par le biais de cet élément, le système de butée (39) présentant un élément de verrouillage (42) raccordé fixement à une partie réglable du siège de véhicule (33) et un élément d'engrènement (44) engrenant dans l'élément de verrouillage (42) et l'élément de butée (54) du dispositif de détachement de siège de véhicule (52) étant couplé à l'élément d'engrènement (44).

11. Dispositif de butée de siège de véhicule (57) selon la revendication 10, **caractérisé en ce que**, en plus du dispositif de détachement de siège de véhicule (52), il y a un dispositif d'actionnement manuel (46) avec lequel le système de butée (39) peut être actionné mécaniquement manuellement de telle sorte que le système de butée (39) peut au choix être actionné
a) par le biais du dispositif d'actionnement manuel (46) ou
b) par le biais du dispositif de détachement de siège de véhicule (52).

12. Dispositif de butée de siège de véhicule (57) selon la revendication 11, **caractérisé en ce que** le dispositif d'actionnement manuel (46) présente un levier manuel (47) qui est couplé à l'élément d'engrènement (44).

13. Dispositif de butée de siège de véhicule (57) selon l'une des revendications 10 à 12, **caractérisé en ce que** le système de butée (39) est découplé du dispositif de détachement de siège de véhicule (52) par le biais d'une course du dispositif d'actionnement manuel (46).

14. Dispositif de butée de siège de véhicule (57), en particulier dispositif de butée de siège de véhicule (57) selon l'une des revendications 10 à 13, **caractérisé en ce**
a) **qu'**il y a un premier dispositif de détachement de siège de véhicule (52) selon l'une des revendications 1 à 9, avec lequel l'élément de butée (54, 54') peut être conduit dans la position de détachement, et
b) en ce qu'il y un deuxième dispositif de détachement de siège de véhicule (52') selon l'une des revendications 1 à 9, avec lequel l'élément de butée (54, 54') peut être conduit dans la position de butée.

15. Siège de véhicule (33) avec un dispositif de détachement de siège de véhicule (52) selon l'une des revendications 1 à 9 ou avec un dispositif de butée de siège de véhicule (57) selon l'une des revendications 10 à 14.
